(19) Europäisches Patentamt
European Patent Office
Office européen des brevets

(11) **EP 4 166 725 B1**

(12) **EUROPEAN PATENT SPECIFICATION**

(45) Date of publication and mention
of the grant of the patent:
**28.01.2026 Bulletin 2026/05**

(21) Application number: **21826163.4**

(22) Date of filing: **09.06.2021**

(51) International Patent Classification (IPC):
*E02F 9/20* (2006.01)          *E02F 9/26* (2006.01)
*G01S 19/53* (2010.01)

(52) Cooperative Patent Classification (CPC):
**E02F 9/264; G01S 5/017; G01S 19/14;
G01S 19/40;** E02F 3/435; G01S 19/49; G01S 19/53

(86) International application number:
**PCT/JP2021/021974**

(87) International publication number:
**WO 2021/256353 (23.12.2021 Gazette 2021/51)**

(54) **CONSTRUCTION MACHINE**

BAUMASCHINE

ENGIN DE CHANTIER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.06.2020   JP 2020103572**

(43) Date of publication of application:
**19.04.2023 Bulletin 2023/16**

(73) Proprietor: **Hitachi Construction Machinery Co.,
Ltd.
Tokyo 110-0015 (JP)**

(72) Inventors:
• **ISHIHARA Shinji
Tokyo 100-8280 (JP)**
• **IZUMI Shiho
Tsuchiura-shi, Ibaraki 300-0013 (JP)**
• **KANARI Yasuhiko
Tsuchiura-shi, Ibaraki 300-0013 (JP)**

(74) Representative: **MERH-IP Matias Erny Reichl
Hoffmann
Patentanwälte PartG mbB
Paul-Heyse-Straße 29
80336 München (DE)**

(56) References cited:
WO-A1-2015/186845     WO-A1-2015/186845
JP-A- 2007 064 853     JP-A- 2009 270 927
JP-A- 2010 534 334     JP-A- 2019 174 300
JP-A- 2020 008 286     JP-A- 2021 050 486
US-A1- 2016 376 772     US-A1- 2018 188 384

## Description

Technical Field

The present invention relates to a construction machine, and more particularly to a construction machine that controls, on the basis of position information of the own machine, a work device or the like that changes in position and posture.

Background Art

In a field of construction machines such as hydraulic excavators, the introduction of intelligent construction, which efficiently utilizes various information by applying an information communication technology to construction work, and thereby streamlines the work, has recently been under way. For example, there are construction machines having functions of assisting in operator's operation such as machine guidance that displays, to the operator, the position and posture of an articulated work device formed by coupling together a plurality of members such as a boom, an arm, and a bucket, and machine control that performs control such that the work device moves along a target construction surface.

Intelligent construction using the coordinates of an own machine on a construction site when performing work support such as the machine guidance or the machine control is referred to as three-dimensional intelligent construction (hereinafter referred to as 3D intelligent construction). A construction machine supporting the 3D intelligent construction includes a satellite positioning system (GNSS: Global Navigation Satellite System) in order to obtain the position of the own machine. The GNSS receives positioning signals from a plurality of satellites, and measures the three-dimensional position (latitude, longitude, and altitude) of the own machine. A construction machine with a work device, such as a hydraulic excavator, necessitates, for the work support, not only the position of the own machine but also a direction in which the work device is facing (orientation of the work device). Therefore, a construction machine is publicly known which is equipped with two GNSS antennas that receive the positioning signals, and identifies the orientation of the work device on the basis of the positioning signals received by the GNSS antennas.

Because of the use of the GNSS, positioning is not normally performed when positioning signals from a sufficient number of satellites cannot be captured. In this case, it is not possible to obtain posture information in a three-dimensional space of the construction machine, the posture information indicating the posture (the three dimensional position coordinates and orientation or the like) of a machine body and the posture of the work device, so that the work support such as the machine guidance or the machine control needs to be stopped. A high frequency of stopping the work support leads to a significant decrease in work efficiency.

In addition, it is known that a small number of satellites available for the positioning can cause variation in positioning result even when positioning using the GNSS can be performed. In this case, there is a fear that highly accurate position information cannot be obtained, and that the performance of the machine guidance or the machine control is consequently decreased.

For such a problem, a technology described in Patent Document 1 has been proposed. A control system of a work machine described in Patent Document 1 is intended to reduce an effect of variation in the positioning result of a positioning device (corresponding to the GNSS) by smoothing a first position (positioning result of the GNSS) measured by the positioning device, using working information of the work machine detected by a state device. In addition, the control system is intended to make it possible to continue the machine guidance or the machine control, even if an abnormality occurs in positioning by the positioning device, by continuing to use position information obtained by the smoothing processing before the abnormality in the positioning as long as a traveling or a swinging (action) of the machine body is not performed.

Prior Art Document

Patent Document

Patent Document 1: WO 2015/186845

Summary of the Invention

Problem to be Solved by the Invention

The work device of a hydraulic excavator as one of construction machines is formed by metallic members. Thus, the positioning signals from the satellites may be reflected or interrupted by the work device. When the hydraulic excavator performs excavating, up and down motion of the work device are repeated, so that the reflection or interruption of the positioning signals may occur repeatedly. Under such an environment, though the number of positioning signals that can be received by the GNSS antennas changes, a sufficient number of satellites available for positioning computation are usually secured. Therefore, the GNSS can continue highly accurate positioning computation (calculation of an RTK-FIX solution).

However, change of the number and arrangement of the satellites available for the positioning (satellite positioning environment) may cause different positioning results of the GNSS. For example, when the reflection or interruption of the positioning signals due to motion of the work device decreases the number of available satellites and causes an imbalance in the satellite arrangement, the positioning results may change even though the positioning results are highly accurate. In order to implement the machine guidance and the machine control of the hydraulic excavator, a strict required accuracy specified in implementation guidelines of intelligent construction (for example ±5 cm in ordinary civil engineering work) needs to be satisfied. However, a change in the positioning result, which is caused by a change in the satellite positioning environment, may adversely affect the implementation of intelligent construction. Therefore, there is a desire for a method of obtaining highly accurate position information even when a change in the posture of the hydraulic excavator itself causes a change in the computation result of satellite positioning.

In the control system described in Patent Document 1, a positioning condition of the positioning device (corresponding to the GNSS) is determined from the reception of the positioning signals on the positioning device, or the like. It is determined that the positioning condition is normal when positioning accuracy is excellent (Fix). On the other hand, it is determined that the positioning condition is abnormal when positioning is not possible or when positioning is possible but the positioning accuracy is poor. When a determination result represents normality, smoothing processing is performed while the work machine is in a non-travelling state and a non-swinging state. When the determination result represents abnormality, on the other hand, the smoothing processing is not performed.

Also in the control system described in Patent Document 1, when motion of the work device causes reflection or interruption of a part of the positioning signals, the accuracy of positioning of the positioning device is assumed to be maintained in an excellent condition (Fix). In this case, it is determined that the positioning condition is normal, and therefore the smoothing processing is performed under conditions where the work machine is not travelling or swinging. Depending on a method of the smoothing processing, variation in the positioning result of the positioning device, which is caused by a change in the satellite positioning environment, may not be able to be suppressed sufficiently. For example, when the variation in the positioning result is large, smoothing processing of a low-pass filter with a small time constant, a moving average, or the like may not be able to smooth the positioning results sufficiently, so that the position information to be used for the machine guidance or the like may vary.

Even if the smoothing processing used by the control system described in Patent Document 1 can suppress variation in the positioning result caused by a change in the satellite positioning environment, it appears to be difficult to obtain accurate position information of the own machine when movement of the work machine occurs without operator's operation. For example, under an environment where the work machine tends to slip, such as an environment with a ground after rainy weather or the like, an underbody may slip only by work of the work device. In this case, the position of the own machine (GNSS antennas) is shifted. The control system determines a non-travelling state and a non-swinging state of the work machine according to the presence or absence of operation of control levers, and determines whether to perform or discontinue the smoothing processing according to a result of the determination. When the work machine slips, the control levers are not operated, and therefore the smoothing processing is performed on the computation results (positioning results) of the positioning device. Therefore, even though the displacement of the GNSS antennas (own machine) occurs actually, the smoothing processing causes a response delay, and it is difficult to obtain accurate position information of the own machine.

The present invention has been made based on the above-described circumstances. It is an object of the present invention to provide a construction machine that can obtain posture information of the construction machine based on accurate position information of the own machine even when variation occurs in computation results of satellite positioning or even when movement of the own machine occurs without operator's operation.

Means for Solving the Problem

The present application includes a plurality of means for solving the above-described problems. According to the presently claimed invention there is provided a construction machine including: a machine body; a work device attached to the machine body in a raiseable and lowerable manner; an antenna that is attached to the machine body and receives positioning signals from a plurality of satellites; a first sensor that senses information on a posture and motion of the machine body; a second sensor that senses information on a posture of the work device; and a computing device that computes posture information indicating the postures of the machine body and the work device. The computing device is configured to perform positioning computation that is to compute a position of the machine body and a variance value of the position of the machine body on a basis of the positioning signals from the plurality of satellites received by the antenna, subject the position of the machine body obtained by the positioning computation to first smoothing processing that is to increase a degree of smoothing as magnitude of the variance value of the position of the machine body obtained by the positioning computation becomes larger, and compute the posture information based on a result of the first smoothing processing, the information sensed by the first sensor, and the information sensed by the second sensor.

Advantages of the Invention

According to the present invention, even when variation in the position as a result of the positioning computation becomes large due to a degradation in the satellite positioning environment, the variance value as a result of the positioning computation is increased, and therefore, by correspondingly strengthening smoothing on the position as a result of the positioning computation, it is possible to obtain position information in which the variation in the position as a result of the positioning computation is suppressed. In addition, when a movement of the machine body occurs without operator's operation, the variance value as a result of the positioning computation hardly changes unless the satellite positioning environment is degraded, and therefore position information following the movement of the machine body can be obtained by smoothing the position as a result of the positioning computation with a strength corresponding to the magnitude of the variance value as a result of the positioning computation. That is, even when variation occurs in computation result of satellite positioning or even when the movement of the own machine occurs without operator's operation, it is possible to obtain the posture information of the construction machine based on accurate position information of the own machine.

Problems, configurations, and effects other than those described above will be made apparent by the following description of embodiments.

Brief Description of the Drawings

FIG. 1 is a perspective view showing a hydraulic excavator to which a construction machine according to a first embodiment of the present invention is applied.

FIG. 2 is a block diagram showing an outline of a functional configuration of a controller that constitutes a part of the construction machine according to the first embodiment of the present invention.

FIG. 3 is an explanatory diagram (celestial diagram) showing an example of the number and arrangement of satellites from which reception can be performed by GNSS antennas when a front work device of the hydraulic excavator is lowered.

FIG. 4 is an explanatory diagram (celestial diagram) showing an example of a change in the number and arrangement of satellites from which reception can be performed by the GNSS antennas when the front work device of the hydraulic excavator shown in FIG. 3 is raised.

FIG. 5 is an explanatory diagram showing differences in positioning resultsaccording to differences between the numbers and arrangements of satellites from which reception can be performed as shown in FIG. 3 and FIG. 4.

FIG. 6 is a block diagram showing details of a functional configuration of a positioning computing section of the controller shown in FIG. 2.

FIG. 7 is a block diagram showing a functional configuration of a first smoothing processing section constituting a part of a position correction computing section of the controller shown in FIG. 6.

FIG. 8 is a block diagram showing a functional configuration of a first example of a second smoothing processing section constituting a part of the position correction computing section of the controller shown in FIG. 6.

FIG. 9 is a block diagram showing a functional configuration of a second example of the second smoothing processing section constituting a part of the position correction computing section of the controller shown in FIG. 6.

FIG. 10 is a flowchart illustrating an example of a procedure for computation processing of the positioning computing section of the controller in the construction machine according to the first embodiment of the present invention.

FIG. 11 is an explanatory diagram showing an example of changes in time series with regard to the number and arrangement of satellites from which reception can be performed by the GNSS antennas (satellite positioning environment) during excavating of the hydraulic excavator (without travelling or swinging).

FIG. 12 is an explanatory diagram showing an example of computation results of a positioning system (positions and variances thereof) in response to the time series changes in the satellite positioning environment shown in FIG. 11.

FIG. 13 is an explanatory diagram showing an example of results by smoothing processing of a comparative example (publicly known technology) for the positions as computation results of the positioning system shown in FIG. 12.

FIG. 14 is an explanatory diagram showing an example of results of processing, by the first smoothing processing section according to the first embodiment, for the positions as computation results of the positioning system shown in FIG. 12.

FIG. 15 is an explanatory diagram showing an example of the occurrence of slipping of the hydraulic excavator (movement of a machine body) and changes regarding the satellite positioning environment in time series during work.

FIG. 16 is an explanatory diagram showing an example of computation results of the positioning system (the positions and the variances thereof) in response to the movement of the hydraulic excavator and the time series changes in the satellite positioning environment as shown in FIG. 15.

FIG. 17 is an explanatory diagram showing an example of results by the smoothing processing of the comparative example (publicly known technology) for the position as computation results of the positioning system shown in FIG. 16.

FIG. 18 is an explanatory diagram showing an example of results of the processing, by the first smoothing processing section according to the first embodiment, for the positions as computation results of the positioning system shown in FIG. 16.

FIG. 19 is an explanatory diagram showing an example of computation results of the positioning system (the positions and the variances thereof) in a case where the hydraulic excavator is moved and the work device is operated.

FIG. 20 is an explanatory diagram showing an example of results by the smoothing processing of the comparative example (publicly known technology) for the positions as computation results of the positioning system shown in FIG. 19.

FIG. 21 is an explanatory diagram showing an example of results of the processing, by the first smoothing processing section according to the first embodiment, for the positions as computation results of the positioning system shown in FIG. 19.

FIG. 22 is a block diagram showing a functional configuration of a controller in a construction machine according to a modification of the first embodiment of the present invention.

FIG. 23 is a block diagram showing a functional configuration of a controller in a construction machine according to a second embodiment of the present invention.

FIG. 24 is a block diagram showing a functional configuration of a first example of a first smoothing processing section constituting a part of a position correction computing section of the controller shown in FIG. 23.

FIG. 25 is a block diagram showing a functional configuration of a second example of the first smoothing processing section constituting a part of the position correction computing section of the controller shown in FIG. 23.

FIG. 26 is a block diagram showing a functional configuration of a controller in the construction machine according to a third embodiment of the present invention.

Modes for Carrying Out the Invention

Construction machines according to embodiments of the present invention will hereinafter be described with reference to the drawings. In the present embodiments, description will be made by taking a hydraulic excavator as an example of the construction machine.

[First Embodiment]

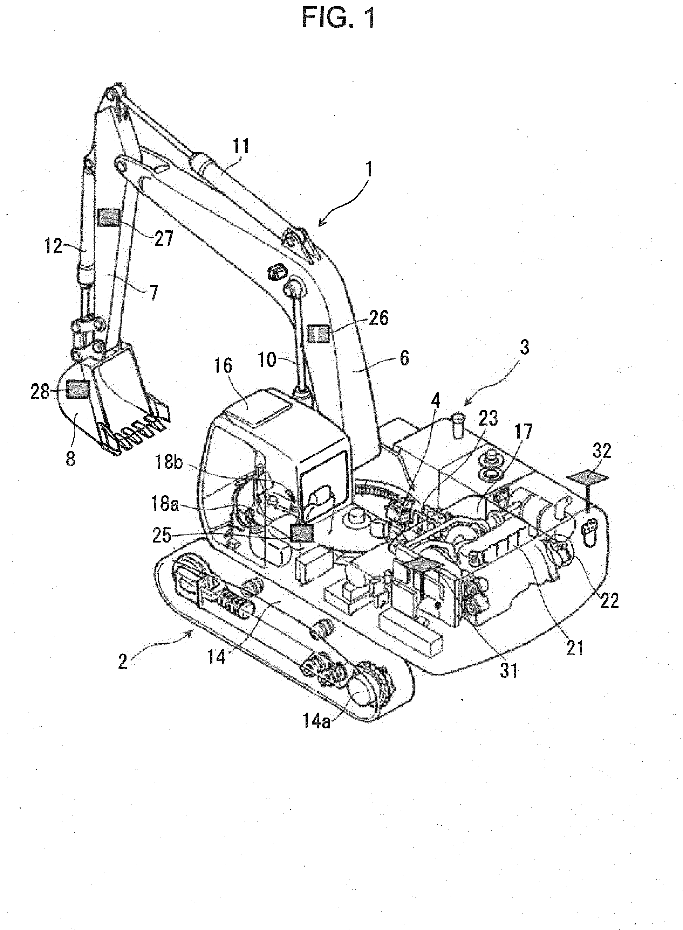

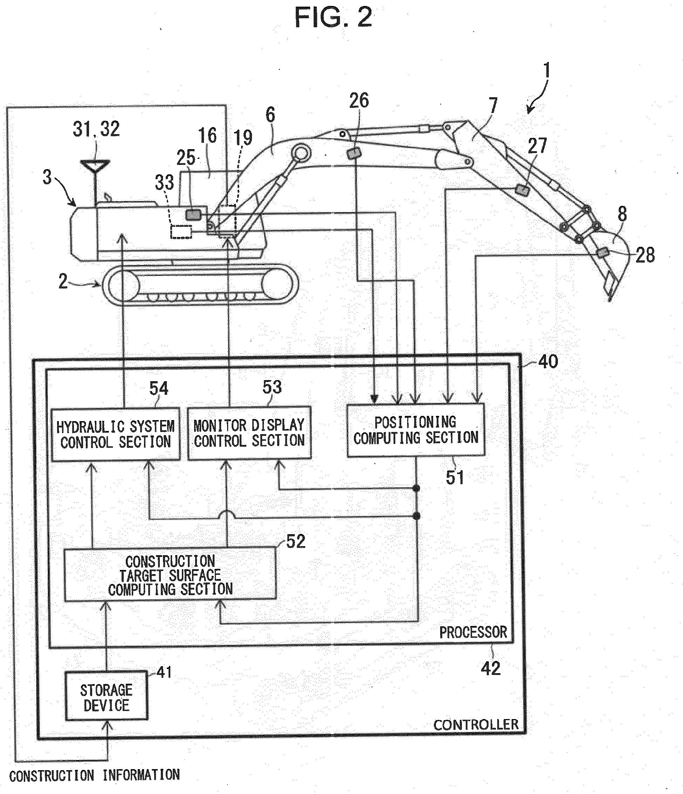

A general configuration of a hydraulic excavator as a construction machine according to a first embodiment of the present invention will first be described with reference to FIG. 1 and FIG. 2. FIG. 1 is a perspective view showing the hydraulic excavator to which the construction machine according to the first embodiment of the present invention is applied. FIG. 2 is a block diagram showing an outline of a functional configuration of a controller that constitutes a part of the construction machine according to the first embodiment of the present invention. In the following, the description will be made using directions as viewed from an operator seated in a cab seat.

In FIG. 1, the hydraulic excavator as the construction machine includes a front work device 1 for excavating or the like and a machine body to which the front work device 1 is attached in a raiseable and lowerable manner. The machine body includes a self-propellable lower track structure 2 and an upper swing structure 3 swingably mounted on the lower track structure 2. The machine body is displaced with motion including travelling motion of the lower track structure 2 and swing motion of the upper swing structure 3.

The front work device 1 is an articulated work device formed by coupling together a plurality of driven members rotatably in a vertical direction. The plurality of driven members include, for example, a boom 6, an arm 7, and a bucket 8 as a work tool. A proximal end portion of the boom 6 is rotatably supported by a front portion of the upper swing structure 3. A proximal end portion of the arm 7 is rotatably supported by a distal end portion of the boom 6. The bucket 8 is rotatably supported by a distal end portion of the arm 7. The boom 6, the arm 7, and the bucket 8 are respectively driven by a boom cylinder 10, an arm cylinder 11, and a bucket cylinder 12 as hydraulic actuators.

The lower track structure 2, for example, has a crawler type track device 14 (only a track device on one side is shown). The track device 14 is driven by a travelling hydraulic motor 14a as a hydraulic actuator.

The upper swing structure 3 is, for example, configured to be swing-driven with respect to the lower track structure 2 by a swing hydraulic motor 4 as a hydraulic actuator. The upper swing structure 3 includes a cab 16 where an operator boards and a machine room 17 housing various kinds of apparatuses.

The cab 16 is provided with operation devices 18a and 18b for operating the hydraulic actuators 4, 10, 11, 12, and 14a. Each of the operation devices 18a and 18b is, for example, an electric control lever device with a control lever that can be inclined forward and rearward and leftward and rightward. The electric control lever devices 18a and 18b have a sensor (not shown) that electrically senses an inclination direction and an inclination amount, that is, an operation direction and an operation amount of the control lever. The electric control lever devices 18a and 18b output operation signals corresponding to the sensed operation directions and the sensed operation amounts to a controller 40 (see FIG. 2) via electric wiring. Operation in a forward-rearward direction and operation in a left-right direction of the control lever devices 18a and 18b are each assigned as operations of the hydraulic actuators 4, 10, 11, 12, and 14a. That is, operation of the control lever devices 18a and 18b is assigned as operation of the front work device 1, operation of the upper swing structure 3 constituting a part of the machine body, and the like. In addition, a monitor 19 (see FIG. 2) on and to which various kinds of information can be displayed and input is installed in the cab 16.

A prime mover 21 such as an engine or a motor, a hydraulic pump device 22 driven by the prime mover 21, and the like are arranged in the machine room 17. A hydraulic fluid delivered from the hydraulic pump device 22 is supplied to each of the hydraulic actuators 4, 10, 11, 12, and 14a, thereby driving each of the hydraulic actuators 4, 10, 11, 12, and 14a. The driving of each of the hydraulic actuators 4, 10, 11, 12, and 14a is controlled by a control valve unit 23 as an aggregate of control valves corresponding to the respective hydraulic actuators 4, 10, 11, 12, and 14a. The control valves constituting the control valve unit 23 control directions and flow rates of the hydraulic fluid supplied from the hydraulic pump device 22 to the corresponding hydraulic actuators 4, 10, 11, 12, and 14a. The driving of each control valve is, for example, controlled by an operation pilot pressure output from a pilot pump (not shown) via a solenoid proportional valve (not shown). Each solenoid proportional valve is controlled by the controller 40 based on the operation signals from the operation devices 18a and 18b. Drives of the respective hydraulic actuators 4, 10, 11, 12, and 14a are thereby controlled via the respective control valves of the control valve unit 23.

As shown in FIGs. 1 and 2, an inertial measurement unit (IMU) 25 is installed in the upper swing structure 3. The inertial measurement unit (hereinafter referred to as a machine body IMU) 25 measures the angular velocity and acceleration of the upper swing structure 3 (machine body) (information on motion of the machine body). When the upper swing structure 3 is motionless, the machine body IMU 25 can sense each of an inclination in the forward-rearward direction of the upper swing structure 3 (pitch angle) and an inclination in the left-right direction (width direction) of the upper swing structure 3 (roll angle) as information on the posture of the machine body on the basis of the direction of gravitational acceleration (vertically downward direction) in an IMU coordinate system set to the machine body IMU 25 and an attachment state of the machine body IMU 25 (relative positional relation between the machine body IMU 25 and the upper swing structure 3). That is, the machine body IMU 25 functions as a sensor that senses information on the posture and motion of the machine body. The machine body IMU 25 outputs sensing results to the controller 40. Incidentally, in the present embodiment, the machine body IMU 25 is assumed to implement a function of computing the pitch angle and roll angle of the upper swing structure 3. However, when the machine body IMU 25 does not include the angle computing function, it suffices to adopt a configuration such that the controller 40 has the angle computing function.

In the boom 6, the arm 7, and the bucket 8 as constituent members of the front work device 1, inertial measurement units 26, 27, and 28 that measure the angular velocities and accelerations of the respective constituent members are respectively installed. A measuring device constituted by these three inertial measurement units 26, 27, and 28 functions as a sensor that senses information on the posture of the front work device 1. In order to distinguish these three inertial measurement units 26, 27, and 28 from one another, the inertial measurement unit 26 for the boom 6 will be referred to as a boom IMU, the inertial measurement unit 27 for the arm 7 will be referred to as an arm IMU, and the inertial measurement unit 28 for the bucket 8 will be referred to as a bucket IMU. The boom IMU 26, the arm IMU 27, and the bucket IMU 28 each output a sensing result to the controller 40. The measuring device including the three IMUs, that is, the boom IMU 26, the arm IMU 27, and the bucket IMU 28 functions as a sensor that senses information on the posture of the front work device 1. In addition, a measuring device having a configuration obtained by adding the machine body IMU 25 to the three IMUs, that is, the boom IMU 26, the arm IMU 27, and the bucket IMU 28 functions as a sensor that senses information on the posture in a three-dimensional space of the construction machine.

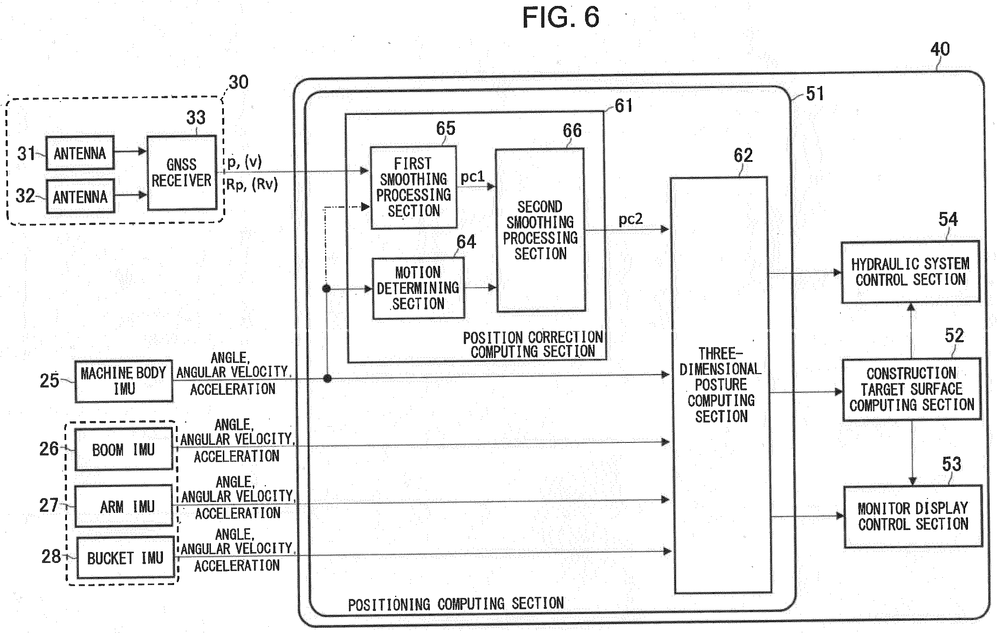

In addition, two GNSS antennas 31 and 32 capable of receiving positioning signals from satellites are attached to the upper swing structure 3. The positioning signals received by the respective GNSS antennas 31 and 32 are input to a GNSS receiver 33 shown in FIG. 2. The GNSS receiver 33 performs positioning computation such as the computation of antenna coordinates (position of a specific part of the machine body) and the computation of the orientation angle of the upper swing structure 3 (machine body) based on the positioning signals received by the GNSS antennas 31 and 32. The GNSS antennas 31 and 32 and the GNSS receiver 33 constitute a positioning system 30 (see FIG. 6) that performs satellite positioning of the hydraulic excavator. The GNSS receiver 33 uses statistical processing for the computation of the position and the orientation angle described above, and therefore calculates also variance values of the position and the orientation angle at the same time in addition to the position and the orientation-angle. In addition, the GNSS receiver 33 can compute not only the position of the GNSS antennas 31 and 32 (machine body) but also the speed thereof. The GNSS receiver 33 outputs, to the controller 40, the position and speed of the GNSS antennas 31 and 32 (machine body) and the orientation angle of the upper swing structure 3 (machine body) as computation results of the positioning computation as well as the variance values thereof.

The GNSS receiver 33 (positioning system 30) can perform RTK (Real Time Kinematic) positioning by connecting to a fixed station of GNSS installed within a site via wireless communication. In a case of a site without a fixed station of GNSS, positioning using network type RTK that obtains the information of an electronic reference station via the Internet can be performed. In the following, the GNSS receiver 33 is assumed to be able to perform RTK positioning irrespective of the presence or absence of the fixed station within the site.

As shown in FIG. 2, the controller 40 controls actions of the hydraulic excavator based on the computation results of the GNSS receiver 33, the sensing results of the machine body IMU 25, the boom IMU 26, the arm IMU 27, and the bucket IMU 28, and the like. The controller 40 includes, as a hardware configuration, for example, a storage device 41 including a RAM, a ROM, and the like and a processor 42 including a CPU or an MPU or the like. The storage device 41 stores, in advance, a program and various kinds of information necessary for controlling actions of the hydraulic excavator. The processor 42 implements various kinds of functions including the following functions by reading the program and the various kinds of information from the storage device 41 as appropriate, and performing processing according to the program.

The controller 40 has a positioning computing section 51, a construction target surface computing section 52, a monitor display control section 53, and a hydraulic system control section 54 as a part of the functions performed by the processor 42.

The positioning computing section 51 computes posture information in the three-dimensional space of the hydraulic excavator, which indicates the posture (three-dimensional position coordinates and an orientation or the like) of the machine body and the posture of the front work device 1 within the work site, on the basis of the computation results of the GNSS receiver 33 and the sensing results of the machine body IMU 25, the boom IMU 26, the arm IMU 27, and the bucket IMU 28. The positioning computing section 51 outputs a computation result to the construction target surface computing section 52, the monitor display control section 53, and the hydraulic system control section 54. Accuracy of the computation result of the positioning computing section 51 with respect to the actual position and posture of the hydraulic excavator affects the computation or control of these sections. Therefore, the computation result of the positioning computing section 51 is desired to be maintained at high accuracy. Details of the configuration of the positioning computing section 51 will be described later.

The construction target surface computing section 52 computes a construction target surface that defines the target shape of a construction object, based on construction information of a three-dimensional working drawing or the like, which is stored in the storage device 41 in advance, and the posture information of the hydraulic excavator as the computation result of the positioning computing section 51. The construction information is, for example, input by a construction manager via the monitor 19 or the like as an input device. The construction target surface computing section 52 further calculates a distance between the construction target surface and a reference point (for example a claw tip of the bucket 8). Incidentally, the construction target surface can also be set by the operator on the spot by operating the monitor 19. The construction target surface computing section 52 outputs a computation result to the monitor display control section 53 and the hydraulic system control section 54.

The monitor display control section 53 controls the display of the monitor 19 within the cab 16. The monitor display control section 53 computes instruction contents of operation assistance for the operator based on the construction target surface as the computation result of the construction target surface computing section 52 and the posture information of the hydraulic excavator as the computation result of the positioning computing section 51. The monitor display control section 53 displays a computation result on the monitor 19. The monitor display control section 53, for example, performs a part of functions as a machine guidance system that assists in operator's operation by displaying the posture of the front work device 1 and the tip position and angle of the bucket 8 of the front work device 1 on the monitor 19. When an abnormality occurs in the positioning result of -the GNSS receiver 33, an interruption of the guidance functions can be notified to the operator by displaying a warning on the monitor 19. The monitor 19 can be configured to give a work instruction or call attention by not only making screen display but also outputting sound. In addition, the monitor 19 is desirably usable as an input device by including a touch panel, rather than being a mere display device. The monitor 19 can, for example, be configured to be installed within the cab 16, or configured as a portable tablet terminal detachably installed within the cab 16.

The hydraulic system control section 54 controls a hydraulic system including the hydraulic pump device 22, the plurality of hydraulic actuators 4, 10, 11, 12, and 14a, and the control valve unit 23. The hydraulic system control section 54, for example, computes an action of the hydraulic excavator based on the construction target surface as the computation result of the construction target surface computing section 52 and the posture information of the hydraulic excavator as the computation result of the positioning computing section 51, and controls the hydraulic system so as to realize the action as a computation result. Specifically, the hydraulic system control section 54 performs a part of functions as a machine control system that restricts the action such that a tip of the bucket 8 does not approach the construction target surface over a certain distance, or performs control such that the bucket 8 moves along the construction target surface. The hydraulic system control section 54 preferably stops the machine control functions when an abnormality occurs in the positioning result of the GNSS receiver 33 and the monitor display control section 53 displays a warning on the monitor 19.

In the following, a system combining the functions of both of the construction target surface computing section 52 and the monitor display control section 53 will be referred to as a machine guidance system. In addition, a system combining the functions of both of the construction target surface computing section 52 and the hydraulic system control section 54 will be referred to as a machine control system.

In the present embodiment, the controller 40 including the positioning computing section 51 and the GNSS receiver 33 constitute a computing device that computes the posture information of .the hydraulic excavator. In addition, while in the present embodiment, one controller 40 is configured to execute all of the functional sections shown in FIG. 2, a configuration can also be adopted in which the functional sections are executed by respective different controllers. When the functional sections are implemented by the different controllers, the controller implementing the positioning computing section 51 and the GNSS receiver 33 constitute the computing device that computes the posture information of the hydraulic excavator.

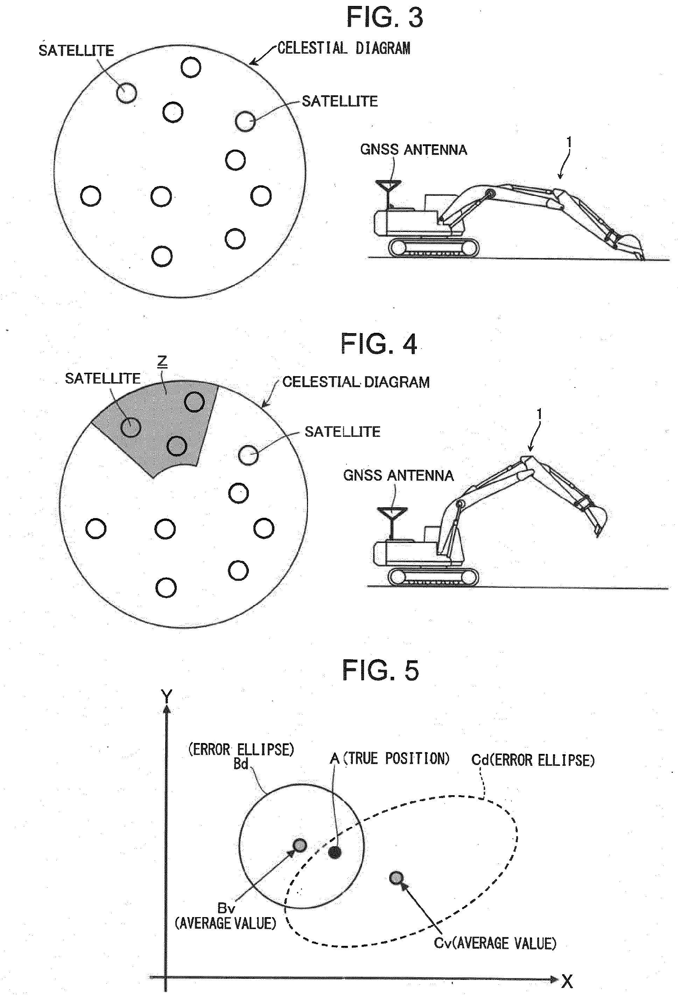

Next, referring to FIGS. 3 to 5, description will be made of problems related to a satellite positioning environment that affects the execution of machine guidance and machine control by the controller. Incidentally, FIGS. 3 to 5 show exaggerated states for the description of phenomena that present problems.

The positioning computing section 51 of the controller 40 uses the computation results of the GNSS receiver 33 (positioning system 30) using the positioning signals of the satellites, in order to compute the posture information of the hydraulic excavator. The posture information as the computation result of the positioning computing section 51 is used in the monitor display control section 53 and the hydraulic system control section 54. When positions as computation results of the positioning system 30 vary despite no actual displacement of the GNSS antennas 31 and 32, the variation affects the computation result of the positioning computing section 51. Consequently, there is a fear that the claw tip position of the bucket 8 of the hydraulic excavator displayed on the monitor 19 by the monitor display control section 53 may vary from an actual position, and that it may therefore become difficult to perform appropriate machine guidance. In addition, there is a fear that the claw tip position of the bucket 8 controlled by the hydraulic system control section 54 may become different from the actual position, and that a finished surface may therefore have an undulating shape. The following are cited as factors that vary the computation results of the positioning system 30 despite no actual displacement.

The driven members of the boom 6, the arm 7, and the bucket 8 constituting the front work device 1 are formed by metallic members. Thus, the positioning signals from the satellites may be reflected or interrupted due to a raising motion of the front work device 1. In excavation motion of the hydraulic excavator, up and down motion (elevating motion) of the front work device 1 are repeated. There is thus a fear that the reflection or interruption of the positioning signals may occur repeatedly. Under such conditions, the number of positioning signals that can be received by the GNSS antennas 31 and 32 is increased or decreased. Even under such conditions, a sufficient number of satellites available for the positioning computation of the positioning system 30 can be usuallysecured, and therefore the positioning system 30 can continue highly accurate positioning computation (calculation of an RTK-FIX solution). However, the change of the number or arrangement of satellites, that is, the change of the satellite positioning environment may result in positioning results with different values (variation in positioning result) despite no actual displacement of the GNSS antennas 31 and 32. This phenomenon will be described in the following.

FIG. 3 represents a celestial diagram schematically showing the number and arrangement of satellites from which reception can be performed by the GNSS antennas (satellite positioning environment) when the hydraulic excavator has lowered the front work device 1. In this case, the front work device 1 does not obstruct the sky, and therefore the GNSS receiver 33 can perform positioning computation under an excellent satellite positioning environment (a large number of satellites and a balanced satellite arrangement).

On the other hand, FIG. 4 represents a celestial diagram showing the satellite positioning environment when the front work device 1 is raised without movement of the hydraulic excavator shown in FIG. 3. Positioning signals from a specific region (specific direction) represented as a region Z are blocked due to the raising motion of the front work device 1. Under such conditions, though the positioning signals of a few satellites cannot be used, there are sufficient satellites from which reception is possible. The GNSS receiver 33 can therefore continue highly accurate positioning computation (calculation of an RTK-FIX solution). However, as compared with the conditions shown in FIG. 3, the number of satellites from which reception is possible is reduced, and an imbalance occurs in the geometric arrangement of the satellites, so that an index of the satellite positioning environment (DOP: Dilution Of Precision) is degraded. Consequently, a difference occurs in results of the positioning computation of the GNSS receiver 33.

FIG. 5 schematically shows a difference in results of the positioning computation when a change is made from the conditions shown in FIG. 3 to the conditions shown in FIG. 4. Incidentally, while the positioning computation of the GNSS receiver 33 computes a position in the three-dimensional space, the position on an two-dimensional plane of X-Y will be considered for simplification of the description. In FIG. 5, a point A represents a true position of the GNSS antennas (the

EP 4 166 725 B1

GNSS antennas are motionless); a point Bv and a solid line Bd respectively represent an average value and an error ellipse (position variance) of the position as a result of the positioning computation under the satellite positioning environment shown in FIG. 3, and a point Cv and a region Cd respectively represent an average value and an error ellipse (position variance) of the position as a result of the positioning computation under the satellite positioning environment shown in FIG. 4.

When the imbalance in the satellite arrangement is small as in the celestial diagram shown in FIG. 3, the error ellipse Bd has a shape close to a perfect circle (sphere in the three-dimensional space). When the positioning accuracy of RTK-FIX is maintained, a difference (A - Bv) between the point A (true antenna position) and the point Bv (average value of the position) falls within about ±2 cm. On the other hand, in the case of the celestial diagram shown in FIG. 4 in which the number and arrangement of satellites are different as compared with the celestial diagram shown in FIG. 3, the average value Cv of the position as a result of the positioning computation is different from the point Bv, and the error ellipse Cd has a shape elongated in a specific direction according to the imbalance in the satellite arrangement. In addition, a difference (A - Cv) of the point Cv (average value of positioning results) from the point A (true antenna position) is larger than the difference (A - Bv) in the case of the celestial diagram shown in FIG. 3. Incidentally, even when the satellite positioning environment changes, a difference between the point Bv and the point Cv falls within a few cm as long as the positioning accuracy of RTK-FIX is maintained.

However, in order to implement the machine guidance and the machine control of the hydraulic excavator, a required accuracy of implementation guidelines for intelligent construction (±5 cm in ordinary civil engineering work) needs to be satisfied. Thus, even a slight difference in results of the positioning computation cannot be ignored. When the machine guidance or the like is performed without consideration being given to differences between the positioning computation result (the average value and the error ellipse) obtained under the satellite positioning environment shown in FIG. 3 and the positioning computation result (the average value and the error ellipse) obtained under the satellite positioning environment shown in FIG. 4, a construction surface as a target may be excavated too much, and construction may need to be performed again. It is therefore necessary to suppress variation in the results of the positioning computation of the positioning system 30 due to a change in the satellite positioning environment.

In addition, in order to implement the machine guidance or the like, when the machine body (GNSS antennas) is actually moved (displaced) according to operator's operation, various kinds of information to be used in the machine guidance or the like are desired to follow the actual displacement. For example, when the hydraulic excavator travels or swings, the various kinds of information are desired to follow a displacement corresponding to the travelling or the swinging. In addition, also when the machine body is slipped due to only a motion of the front work device 1 without the hydraulic excavator travelling or swinging, and the GNSS antennas are thereby displaced without operator's operation, the various kinds of information to be used in the machine guidance or the like are desired to follow an actual displacement.

In addition, even when the hydraulic excavator is not travelling or swinging, the actual position of the GNSS antennas may be slightly displaced by vibration caused by motion of the front work device 1 or the like. At this time, the positioning result of the positioning system 30 may vary due to the actual displacement caused by the vibration of the hydraulic excavator. The variation in the positioning result of the positioning system 30 caused by the vibration of the hydraulic excavator needs to be suppressed in order to implement the machine guidance or the like.

The various kinds of information to be used for the machine guidance and the machine control are thus desired to be maintained at high accuracy with respect to the actual information. Accordingly, the controller 40 according to the present embodiment is configured to correct the positioning results of the positioning system 30 according to a change in the satellite positioning environment and the presence or absence of motion of the machine body (upper swing structure 3).

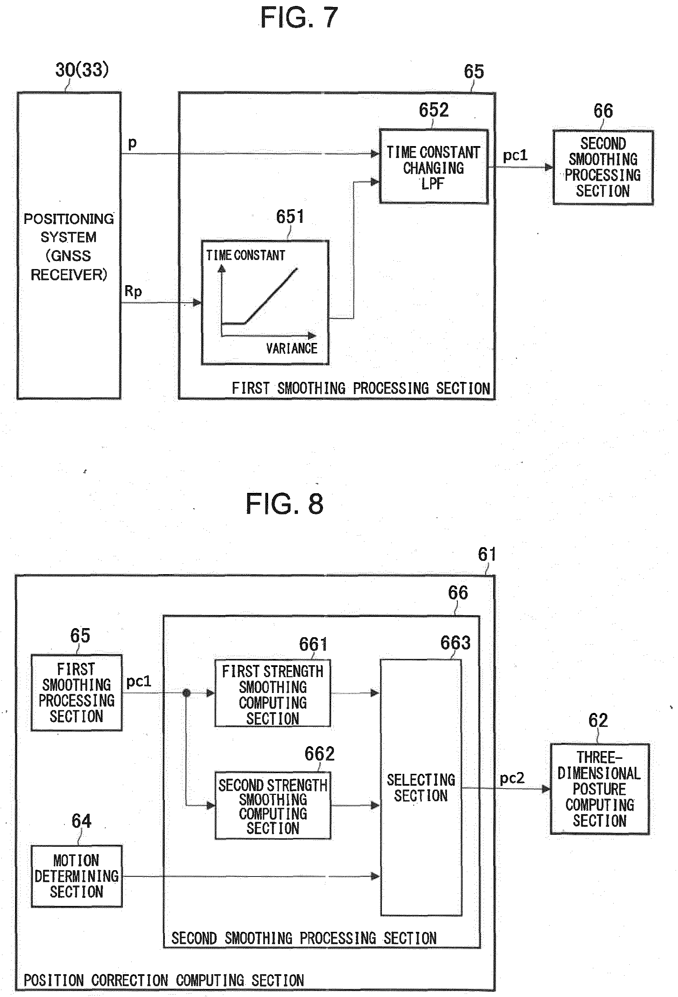

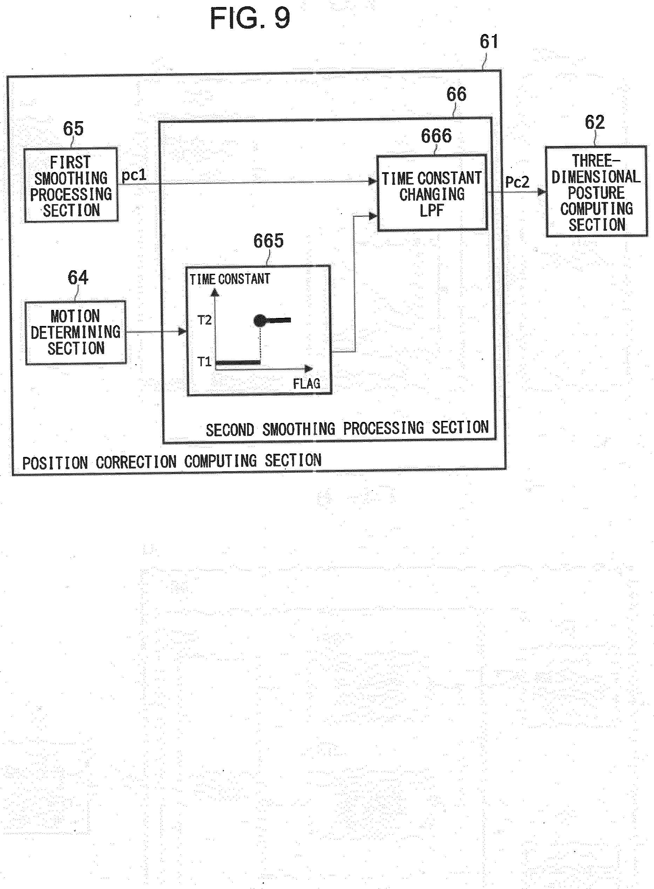

Next, referring to FIGS. 6 to 9, description will be made of details of a functional configuration of the positioning computing section of the controller in the construction machine according to the first embodiment of the present invention. FIG. 6 is a block diagram showing details of a functional configuration of the positioning computing section of the controller shown in FIG. 2. FIG. 7 is a block diagram showing a functional configuration of a first smoothing processing section constituting a part of a position correction computing section of the controller shown in FIG. 6. FIG. 8 is a block diagram showing a functional configuration of a first example of a second smoothing processing section constituting a part of the position correction computing section of the controller shown in FIG. 6. FIG. 9 is a block diagram showing a functional configuration of a second example of the second smoothing processing section constituting a part of the position correction computing section of the controller shown in FIG. 6.

In FIG. 6, the positioning computing section 51 of the controller 40 includes: a position correction computing section 61 that corrects the position as a computation result of the positioning system 30; and a three-dimensional posture computing section 62 that computes posture information indicating the posture in the three-dimensional space of the hydraulic excavator (the front work device 1 and the machine body) on the basis of the corrected position as a computation result of the position correction computing section 61 and the sensing results of the respective IMUs 25, 26, 27, and 28.

The position correction computing section 61 corrects the position as a computation result of the positioning system 30 according to the satellite positioning environment (the number and arrangement of satellites or the like from which reception can be performed by the GNSS antennas 31 and 32) and the presence or absence of motion of the

9

machine body (travelling, swinging, or the like) to obtain the corrected position of a predetermined part of the machine body (GNSS antennas 31 and 32). The position correction computing section 61 is characterized by subjecting the position as a computation result of the positioning system 30 to two stages of smoothing processing, that is, a smoothing processing according to the satellite positioning environment and a smoothing processing according to the presence or absence of machine body motion. Specifically, the position correction computing section 61, for example, includes: a motion determining section 64 that determines the presence or absence of motion (displacement) of the machine body; a first smoothing processing section 65 that subjects the position as a computation result of the positioning system 30 to the smoothing processing according to the satellite positioning environment (first smoothing processing); and a second smoothing processing section 66 that performs smoothing processing according to a determination result of the motion determining section 64 (second smoothing processing). The position correction computing section 61 outputs the corrected position as a computation result to the three-dimensional posture computing section 62.

The motion determining section 64 determines the presence or absence of motion of the machine body (upper swing structure 3) based on the angular velocity and acceleration of the machine body (upper swing structure 3) as sensing results of the machine body IMU 25. The motion determining section 64 outputs a determination result to the second smoothing processing section 66. When the machine body is in motion, for example when the machine body is travelling or swinging, the actual position of the GNSS antennas 31 and 32 attached to the machine body changes with the motion of the machine body. On the other hand, it is assumed that the actual position of the GNSS antennas 31 and 32 does not change when the machine body is motionless (stationary).

The motion determining section 64 for example determines that the machine body is in motion when the angular velocity and the acceleration as sensing results of the machine body IMU 25 each exceed corresponding threshold values, whereas otherwise (when equal to or lower than the threshold values), the motion determining section 64 determines that the machine body is motionless (stationary). More specifically, it is determined that the machine body is in motion when a composite value Acc of three-axis accelerations sensed by the machine body IMU 25 does not coincide with a gravitational acceleration g, or when an angular velocity of any axis of three axes is not zero. However, because the sensed values of the machine body IMU 25 have a bias (steady error) and include sensor noise, threshold values are desirably set for the determination. For example, it is determined that the machine body is in motion when any of the following inequations of (Formula 1) to (Formula 5) holds, where an acceleration threshold value is set as $A_{th}$, and an angular velocity threshold value is set as $\omega_{th}$.

$$Acc > g + A_{th} \quad \ldots \text{(Formula 1)}$$

$$Acc < g - A_{th} \quad \ldots \text{(Formula 2)}$$

$$|\omega x| > \omega_{th} \quad \ldots \text{(Formula 3)}$$

$$|\omega y| > \omega_{th} \quad \ldots \text{(Formula 4)}$$

$$|\omega z| > \omega_{th} \quad \ldots \text{(Formula 5)}$$

Incidentally, $\omega x$, $\omega y$, and $\omega z$ are of angular velocities of an x-axis, a y-axis, and a z-axis as sensed values of the machine body IMU 25, respectively.

The first smoothing processing section 65 subjects a position p (position of the GNSS antennas 31 and 32) as one computation result of the positioning system 30 to the first smoothing processing that is to increase a degree of smoothing as a position variance value Rp as another result of the positioning computation of the positioning system 30 becomes larger. As described earlier, when the index (DOP) indicating the quality of the satellite positioning environment for the positioning system 30 is degraded, variation in the position p as a result of the positioning computation of the positioning system 30 is increased, and the position variance value Rp as another result of the positioning computation is also increased. The first smoothing processing is to utilizes this fact, and to change the strength of smoothing according to the magnitude of the variance value Rp as a computation result of the positioning system 30 to suppress the variation in the position p as a computation result of the positioning system 30 caused according to the satellite positioning environment. The first smoothing processing section 65 outputs a first corrected position pc1 obtained by the first smoothing processing to the second smoothing processing section 66.

Specifically, as shown in FIG. 7, for example, a first example of the first smoothing processing section 65 can be constituted by a time constant determining table 651 that outputs a larger time constant as the variance value Rp input to the time constant determining table 651 is larger and a time constant changing low-pass filter (hereinafter referred to as a time constant changing LPF) 652 that can change a time constant according to input from the time constant determining table 651. An input value of the time constant determining table 651 is the position variance value Rp as a computation result of the positioning system 30, and assumes only a positive value. The variance value Rp as a computation result of the positioning system 30 is sequentially input to the time constant determining table 651 in each control cycle (computation cycle) of the controller 40. The time constant determining table 651 sequentially outputs the time constant determined based on the variance value Rp from the positioning system 30 to the time constant changing LPF 652. Since the time constant of the time constant changing LPF 652 needs to be positive, a value larger than zero is set as a minimum value of the time constant in the time constant determining table 651. The time constant changing LPF 652, in each control cycle (computation cycle) of the controller 40, changes the time constant according to the input from the time constant determining table 651, and performs processing on the position p as a computation result of the positioning system 30. This allows the position p as a computation result of the positioning system 30 to be subjected to the first smoothing processing that is to increase the degree of smoothing as the variance value Rp as a computation result of the positioning system 30 becomes larger.

In addition, a second example of the first smoothing processing section 65 can, for example, be constituted by a Kalman filter (hereinafter referred to as a KF) that uses the position as a computation result of the positioning system 30 and the variance thereof. Using of the KF allows the position p as a comjputation result of the positioning system 30 to be subjected to the first smoothing processing that is to increase the degree of smoothing as the variance value Rp as a computation result of the positioning system 30 becomes larger.

The KF generally handles a state equation of (Formula 6) and an observation equation of (Formula 7) in the following.

$$x_k = F_{k-1}x_{k-1} + w_{k-1} \quad \dots \text{ (Formula 6)}$$

$$y_k = H_k x_k + v_k \quad \dots \text{ (Formula 7)}$$

Here, $x_k$ is a state vector, $y_k$ is an observation vector, $w_{k-1}$ is process noise, $v_k$ is observation noise, $F_{k-1}$ is a transition matrix, and $H_k$ is an observation matrix. Incidentally, suffixes k and k-1 denote time. Suppose that the variance of process noise $w_k$ is given by $Q_k$, and the variance of the observation noise $v_k$ is given by $R_k$.

After the above preparation, an update equation of the KF can be given by (Formula 8), and a gain used for an update can be given by (Formula 9).

[Expression 1]

$$\hat{x}_{k|k} = \hat{x}_{k|k-1} + K_k\left(y_k - H_k\hat{x}_{k|k-1}\right) \quad \dots \text{ (Formula 8)}$$

$$K_k = P^{xx}_{k|k-1}H_k\left(H_k P^{xx}_{k|k-1}H_k + R_k\right)^{-1} \quad \dots \text{ (Formula 9)}$$

Incidentally, a prediction value $\hat{x}_{k|k-1}$ ("^" is a circumflex) can be given by . (Formula 10) as the following equation with respect to an update value $\hat{x}_{k-1|k-1}$ preceding by one time interval.
[Expression 2]

$$\hat{x}_{k|k-1} = F_{k-1}\hat{x}_{k-1|k-1} \quad \dots \text{ (Formula 10)}$$

In addition, supposing that a position vector at a certain time k is $p_k$, and supposing that the position $p_{k-1}$ at time k-1 preceding by one time interval is driven by an effect of certain noise, the state equation can be expressed by the dynamics of (Formula 11).

$$p_k = p_{k-1} + wp_{k-1} \quad \dots \text{ (Formula 11)}$$

Here, $wp_{k-1}$ is process noise related to arrangement. The variance of this process noise $wp_{k-1}$ corresponds to

$Q_{k-1}$ in the above description.

In addition, the observation equation can be given by (Formula 12) in the following, supposing that position information $p_k$ at time k is affected by observation noise $vp_k$.

$$y_k = p_k + vp_k \quad \ldots \text{(Formula 12)}$$

Here, the variance of the observation noise $vp_k$ corresponds to $R_k$ in the above description.

(Formula 11) is obtained supposing that the state vector is $x_k = p_k$, the transition matrix is $F_{k-1} = I$, and the process noise is $w_{k-1} = wp_{k-1}$ in (Formula 6). In addition, (Formula 12) is obtained supposing that the observation matrix is $H_k = I$, and the observation noise is $v_k = vpk$ in (Formula 7). Incidentally, I is a unit matrix.

As a result of the above preparation, the KF can be applied as the first smoothing processing section 65 that performs the first smoothing processing, which is to increase the degree of smoothing as the variance value as a computation result of the positioning system 30 becomes larger.

Here, the variance $R_k$ is a certain value set by a designer when the KF is designed. In general, the variance $R_k$ is often set at a fixed value. On the other hand, in the present embodiment, the variance as a computation result of the positioning system 30 is used as the variance $R_k$ of the KF. Therefore, in the KF applied as the first smoothing processing section 65 according to the present embodiment, the variance $R_k$ is sequentially changed according to changes in the satellite positioning environment.

According to (Formula 8), at each time, a value obtained by multiplying the position information $y_k$ received from the positioning system 30 by the update gain $K_k$ is reflected in the estimated value $^\wedge x_{k|k}$. In addition, according to (Formula 9), the update gain $K_k$ is calculated on the basis of an inverse matrix (division) of the variance $R_k$ of the observation noise. This means that when the variance $R_k$ of the observation noise (variance as a result of the positioning computation of the positioning system 30) becomes larger, the update gain $K_k$ is correspondingly decreased. From the above, it is understood that the position information $y_k$ from the positioning system 30 is less reflected in the estimated value $^\wedge x_{k|k}$ when the variance $R_k$ of the observation noise becomes larger. That is, this KF can realize the first smoothing processing that is to increase the degree of smoothing as the variance value as a computation result of the positioning system 30 becomes larger, and can provide a smoothing effect similar to that of the configuration including the time constant changing LPF 652 in the first example shown in FIG. 7.

In addition, a first modification of the second example of the first smoothing processing section 65 can be constituted by a KF that uses also speed information in addition to the position as input information from the positioning system 30.

Supposing that a position vector is $p_k$, that a speed vector is $v_k$, and that a computation cycle of the controller 40 is $\Delta t$, dynamics can be expressed by (Formula 13) in the following.

[Expression 3]

$$\begin{bmatrix} p_k \\ v_k \end{bmatrix} = \begin{bmatrix} I & \Delta t \\ 0 & I \end{bmatrix} \begin{bmatrix} p_{k-1} \\ v_{k-1} \end{bmatrix} + \begin{bmatrix} wp_{k-1} \\ wv_{k-1} \end{bmatrix} \quad \ldots \text{(Formula 13)}$$

Here, $wp_{k-1}$ is process noise related to the position, and $wv_{k-1}$ is process noise related to the speed.

The variance $Q_{k-1}$ of these process noises is given by (Formula 14) in the following.

[Expression 4]

$$Q_{k-1} = \begin{bmatrix} Q_{k-1}^p & 0 \\ 0 & Q_{k-1}^v \end{bmatrix} \quad \ldots \text{(Formula 14)}$$

Incidentally, $Q_{k-1}^p$ is the variance of $wp_{k-1}$, and $Q_{k-1}^v$ is the variance of $wv_{k-1}$.

In addition, the observation equation can be given by (Formula 15) in the following.

[Expression 5]

$$y_k = \begin{bmatrix} I & 0 \\ 0 & I \end{bmatrix} \begin{bmatrix} p_k \\ v_k \end{bmatrix} + \begin{bmatrix} vp_k \\ vv_k \end{bmatrix} \quad \ldots \text{(Formula 15)}$$

Here, $vv_k$ is observation noise related to the speed.

The variance $R_k$ of the observation noises related to the position and the speed is given by (Formula 16) in the following.
[Expression 6]

$$R_k = \begin{bmatrix} R_k^p & 0 \\ 0 & R_k^v \end{bmatrix} \qquad \dots \text{(Formula 16)}$$

Incidentally, $R^p_k$ is the variance of $vp_k$, and $R^v_k$ is the variance of $vv_k$. The variances of computation results of the positioning system 30 are used as $R^p_k$ and $R^v_k$.

(Formula 13) is obtained when the state vector $x_k$, the transition matrix $F_k$, and the process noise $w_{k-1}$ in (Formula 6) as a state equation are set as follows.

[Expression 7]

$$x_k = \begin{bmatrix} p_k \\ v_k \end{bmatrix}, \quad F_k = \begin{bmatrix} I & \Delta t \\ 0 & I \end{bmatrix}, \quad w_{k-1} = \begin{bmatrix} wp_{k-1} \\ wv_{k-1} \end{bmatrix}$$

In addition, (Formula 15) is obtained when the observation matrix $H_k$ and the observation noise $v_k$ in (Formula 7) as an observation equation are set as follows.

[Expression 8]

$$H_k = \begin{bmatrix} I & 0 \\ 0 & I \end{bmatrix}, \quad v_k = \begin{bmatrix} vp_k \\ vv_k \end{bmatrix}$$

From the above, the KF adopting the above-described equations can be applied as the first smoothing processing section 65 with a configuration that uses both of the position and the speed as computation results of the positioning system 30. A characteristic of not reflecting the position as a computation result of the positioning system 30 when the satellite positioning environment is not excellent (the variance of the positioning result is large) is maintained by using, as the variance $R_k$ of the observation noises of the KF, the variances as computation results of the positioning system 30. That is, this KF smooths the position of the positioning result to which the speed as a computation result of the positioning system 30 is related after changing the strength of smoothing according to the variances of the position and the speed as another result of the positioning computation.

Incidentally, in (Formula 13), unlike (Formula 11), speed information is considered in computing the position. Therefore, even when the positions as results of the positioning computation momentarily vary, grounds that the actual position is not changed are strengthened when the speeds as results of the positioning computation do not vary. The first modification of the second example (KF) of the first smoothing processing section 65 is therefore expected to increase the effect of suppressing variation in the position as results of the positioning computation.

In addition, as a second modification of the second example including the KF of the first smoothing processing section 65, a KF is applied which uses information of both of results (information of position and speed) of the positioning computation of the positioning system 30 and a sensing result (acceleration) of the machine body IMU 25. This considers the dynamics of (Formula 17) in which an acceleration vector $a_k$ sensed by the IMU is added to the position vector $p_k$ and the speed vector $v_k$.

[Expression 1]

$$\begin{bmatrix} p_k \\ v_k \\ a_k \end{bmatrix} = \begin{bmatrix} I & \Delta t & \dfrac{\Delta t^2}{2} \\ 0 & I & \Delta t \\ 0 & 0 & I \end{bmatrix} \begin{bmatrix} p_{k-1} \\ v_{k-1} \\ a_{k-1} \end{bmatrix} + \begin{bmatrix} wp_{k-1} \\ wv_{k-1} \\ wa_{k-1} \end{bmatrix} \qquad \dots \text{(Formula 17)}$$

However, the positioning system 30 cannot compute the acceleration of the machine body (GNSS antennas 31 and 32). Thus, the observation equation is set as (Formula 18).
[Expression 2]

$$y_k = \begin{bmatrix} I & 0 & 0 \\ 0 & I & 0 \end{bmatrix} \begin{bmatrix} p_{k-1} \\ v_{k-1} \\ a_{k-1} \end{bmatrix} + \begin{bmatrix} vp_k \\ vv_k \end{bmatrix} \qquad \ldots \text{(Formula 18)}$$

In this case, it is to be noted that the variance $R_k$ of the observation noises is set to be the same as in (Formula 16).

The first smoothing processing that is to increase the degree of smoothing as the variance value as a computation result of the positioning system 30 becomes larger can be realized by using the dynamics of (Formula 17) to configure the KF according to the above-described method. This KF takes into consideration information that the machine body IMU 25 does not sense acceleration when the machine body (upper swing structure 3) is motionless (stationary). Thus, the KF can be expected to further improve the effect of suppressing variation in the position as computation results of the positioning system 30, which occurs according to a change in the satellite positioning environment.

It is to be noted that the second example of the first smoothing processing section 65 is not limited to the KF as long as the second example of the first smoothing processing section 65 uses certain dynamics as in (Formula 6) and (Formula 7). For example, when nonlinearity is included in the dynamics, a particle filter or a GSF (Gaussian Sum Filter) may be used. These filters all perform statistical processing, and have a function of similar smoothing processing in that the position information $y_k$ is less reflected in the estimated value $\hat{x}_{k|k}$ as the variance value as a computation result of the positioning system 30 becomes larger. In the present description, filters that perform smoothing processing including these pieces of statistical processing described above will be referred to as statistical filters.

The second smoothing processing section 66 subjects the first corrected position pc1 as a processing result of the first smoothing processing section 65 to the second smoothing processing that is to change the strength of smoothing according to the presence or absence of motion of the machine body (the lower track structure 2 and the upper swing structure 3) as the determination result of the motion determining section 64. The second smoothing processing section 66 outputs a second corrected position pc2 as a processing result to the three-dimensional posture computing section 62. The second smoothing processing section 66 makes smoothing stronger when the motion determining section 64 determines that the machine body is motionless (stationary) than when the motion determining section 64 determines that the machine body is in motion. The actual position of the GNSS antennas 31 and 32 is assumed to be unchanged when the machine body is stationary. In this case, relatively strengthened smoothing of the input position information (first corrected position pc1) suppresses variation in the position information. When the machine body is in motion, on the other hand, the actual position of the GNSS antennas 31 and 32 changes with the motion of the machine body. In this case, the second corrected position pc2 output from the second smoothing processing section 66 to the three-dimensional posture computing section 62 is desired to follow the actual displacement of the GNSS antennas 31 and 32. Accordingly, relatively weakened smoothing of the input position information (first corrected position pc1) suppresses a response delay in the second corrected position pc2 as the processing result of the second smoothing processing section 66.

Specifically, as shown in FIG. 8, for example, the second smoothing processing section 66 includes: a first strength smoothing computing section 661 that subjects the first corrected position pc1 as the processing result of the first smoothing processing section 65 to processing of relatively weak smoothing; a second strength smoothing computing section 662 that subjects the first corrected position pc1 as the processing result of the first smoothing processing section 65 to processing of relatively stronger smoothing than the first strength smoothing computing section 661; and a selecting section 663 that selects a processing result of one of the first strength smoothing computing section 661 and the second strength smoothing computing section 662 according to the determination result of the motion determining section 64, and outputs the processing result to the three-dimensional posture computing section 62. The first strength smoothing computing section 661 is, for example, constituted by an LPF with a time constant that is small to a degree that no response delay occurs in the position information as a processing result when motion of the machine body (the lower track structure 2 and the upper swing structure 3) such as travelling or swinging is in progress (when an actual displacement of the GNSS antennas 31 and 32 is caused). A main reason of this smoothing is the alleviation of variation in display value at a time of displaying the position information used in the machine guidance on the monitor 19. On the other hand, the second strength smoothing computing section 662 is, for example, constituted by an LPF with a time constant larger than the time constant of the LPF of the first strength smoothing computing section 661. This time constant is set to suppress small variation in the position as a computation result of the positioning system 30 due to variation in the position of the GNSS antennas 31 and 32 caused by vibration of the hydraulic excavator. When the motion determining section 64 determines that the machine body is in motion, the selecting section 663 selects position information as a processing result of the first strength,smoothing computing section 661, and outputs the position information to the three-dimensional posture computing section 62. Consequently, the second corrected position pc2 output from the selecting section 663 changes so as to follow a change in the actual position, so that the occurrence of a response delay is suppressed. When the motion determining section 64 determines that the machine body is motionless (stationary), on the other hand, position information as a processing result of the second strength smoothing computing section 662 is selected, and output to the three-dimensional posture computing section 62. Consequently, position variation in the computation result of the positioning system 30 is suppressed when the actual position is assumed to be unchanged.

In addition, as shown in FIG. 9, for example, the second smoothing processing section 66 can also be constituted by a time constant determining table 665 in which a time constant is set according to the determination result of the motion determining section 64 and a time constant changing LPF 666 that can change a time constant according to an input value from the time constant determining table 665. A flag management is performed in which, as output of the motion determining section 64, a result of determination that the machine body is in motion is set to be zero, and a result of determination that the machine body is motionless (stationary) is set to be one. The time constant determining table 665 sets a relatively small first time constant T1 when the flag is zero, and sets a second time constant T2 larger than the first time constant T1 when the flag is one. When the output from the motion determining section 64 is zero, the time constant determining table 665 outputs the first time constant T1 to the time constant changing LPF 666. When the output from the motion determining section 64 is one, on the other hand, the second time constant T2 is output to the time constant changing LPF 666. The time constant changing LPF. 666 changes the time constant according to the time constant T1 or T2 from the time constant determining table 665, and performs processing on the first corrected position pc1 as the processing result of the first smoothing processing section 65. Thus, by changing the time constant according to the determination result of the motion determining section 64, the time constant changing LPF 666 can subject the first corrected position pc1 as the processing result of the first smoothing processing section 65 to smoothing processing according to the presence or absence of motion of the machine body. The second smoothing processing section 66 of such a configuration can also suppress position variation in the computation result of the positioning system 30 during no motion of the machine body, and obtain the position information that follows actual displacements during motion of the machine body to have response delay suppressed.

As shown in FIG. 6, the three-dimensional posture computing section 62 computes posture information (various kinds of three-dimensional coordinates necessary for the machine guidance and the machine control, such as a central position of the claw tip of the bucket 8) indicating the posture in the three-dimensional space of the hydraulic excavator by using the sensing results (angle, angular velocity, and acceleration) of the respective IMUs 25, 26, 27, and 28 after setting, as a starting point, the position information pc2 corrected by the two stages of smoothing processing in the position correction computing section 61. This computation follows ordinary geometric relations, and therefore detailed description thereof will be omitted. The posture information as a computation result is output to the construction target surface computing section 52, the monitor display control section 53, and the hydraulic system control section 54, and is used for computation in the machine guidance and the machine control.

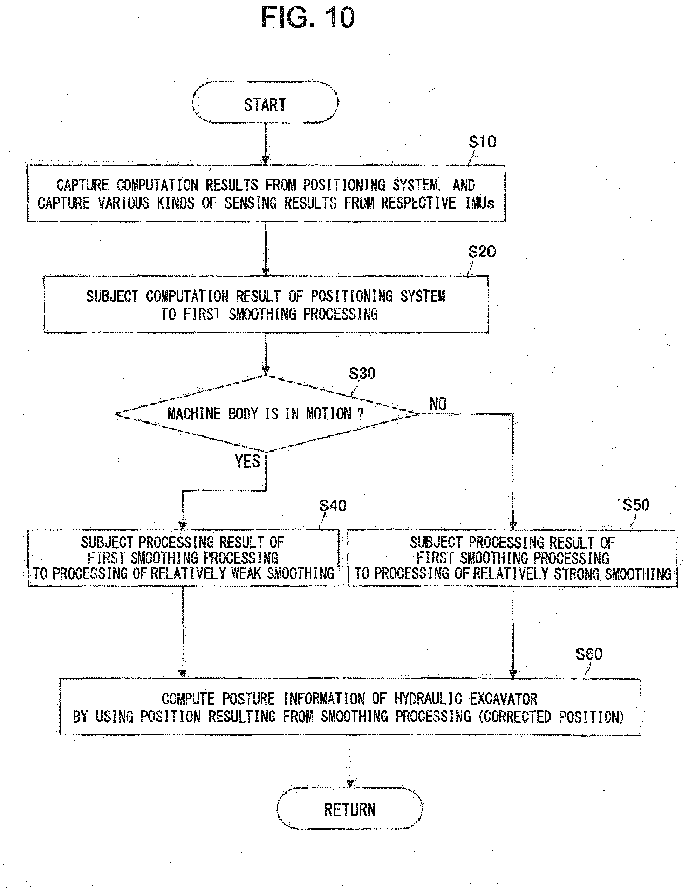

Next, referring to FIG. 10, description will be made of an example of a procedure for computation processing of the positioning computing section of the controller constituting the construction machine according to the first embodiment of the present invention. FIG. 10 is a flowchart illustrating an example of computation processing of the positioning computing section of the controller in the construction machine according to the first embodiment of the present invention.

In FIG. 10, the positioning computing section 51 first captures computation results from the positioning system 30 (GNSS receiver 33) shown in FIG. 6, and captures various kinds of sensing results from the respective IMUs 25, 26, 27, and 28 (step S10).

Next, the first smoothing processing section 65 of the positioning computing section 51 subjects the position as a computation result of the positioning system 30 to the first smoothing processing that is to increase the degree of smoothing as the variance value of a positioning computation of the positioning system 30 becomes larger (step S20).

Next, the motion determining section 64 of the positioning computing section 51 determines whetheror not the machine body is in motion (step S30). When the motion determining section 64 determines that the machine body is in motion (YES), the processing proceeds to step S40. When the motion determining section 64 determines that the machine body is motionless (NO), on the other hand, the processing proceeds to step S50.

In step S40, the second smoothing processing section 66 of the positioning computing section 51 subjects the first corrected position as a processing result of the first smoothing processing section 65 to relatively weakened smoothing processing. In the case of the first example of the second smoothing processing section 66 shown in FIG. 8, the selecting section 663 outputs the processing result of the first strength smoothing computing section 661 (LPF with a relatively small time constant) to the three-dimensional posture computing section 62 based on the determination result of the motion determining section 64. In the case of the second example of the second smoothing processing section 66 shown in FIG. 9, the time constant changing LPF 666 performs smoothing processing based on the relatively small first time constant T1 determined by referring to the time constant determining table 665 based on the determination result of the motion determining section 64. After performing the processing of step S40, the positioning computing section 51 proceeds to step S60.

In addition, in step S50, the second smoothing processing section 66 of the positioning computing section 51 subjects the first corrected position as the processing result of the first smoothing processing section 65 to relatively strengthened smoothing processing. In the case of the first example of the second smoothing processing section 66 shown in FIG. 8, the selecting section 663 outputs the processing result of the second strength smoothing computing section 662 (LPF with a relatively large time constant) to the three-dimensional posture computing section 62 based on the determination result of the motion determining section 64. In the case of the second example of the second smoothing processing section 66 shown in FIG. 9, the time constant changing LPF 666 performs smoothing processing based on the relatively large second time constant T2 determined by referring to the time constant determining table 665 based on the determination result of the motion determining section 64. After performing the processing of step S50, the positioning computing section 51 proceeds to step S60.

In step S60, the three-dimensional posture computing section 62 of the positioning computing section 51 computes the posture information (three-dimensional coordinates of various kinds of parts, which are necessary for the machine guidance and the machine control, such as the central position of the claw tip of the bucket 8) of the hydraulic excavator by using the second corrected position pc2 as a processing result of the second smoothing processing section 66.

A return is made to the start after the execution of the processing of step S60. The positioning computing section 51 can obtain highly accurate position information necessary for the machine guidance and the machine control by repeatedly performing the computation cycle of steps S10 to S60 many times.

Next, actions and effects of the construction machine according to the first embodiment of the present invention will be described while compared with a technology according to a comparative example. First, referring to FIGS..11 to 14, description will be made of actions and effects of the present embodiment in a case where only the front work device 1 is activated by operator's operation (motion of the machine body such as travelling or swinging is absent) and a machine body displacement without an operator's operation, such as slipping of the machine body, is absent. The positioning computing section 51 of the controller 40 according to the present embodiment always performs the two stages of smoothing processing by the first smoothing processing section 65 and the second smoothing processing section 66. However, in the following, in order to facilitate understanding, only actions and effects of the first smoothing processing by the first smoothing processing section 65 will be described, and description of actions and effects of the second smoothing processing by the second smoothing processing section 66 will be omitted.

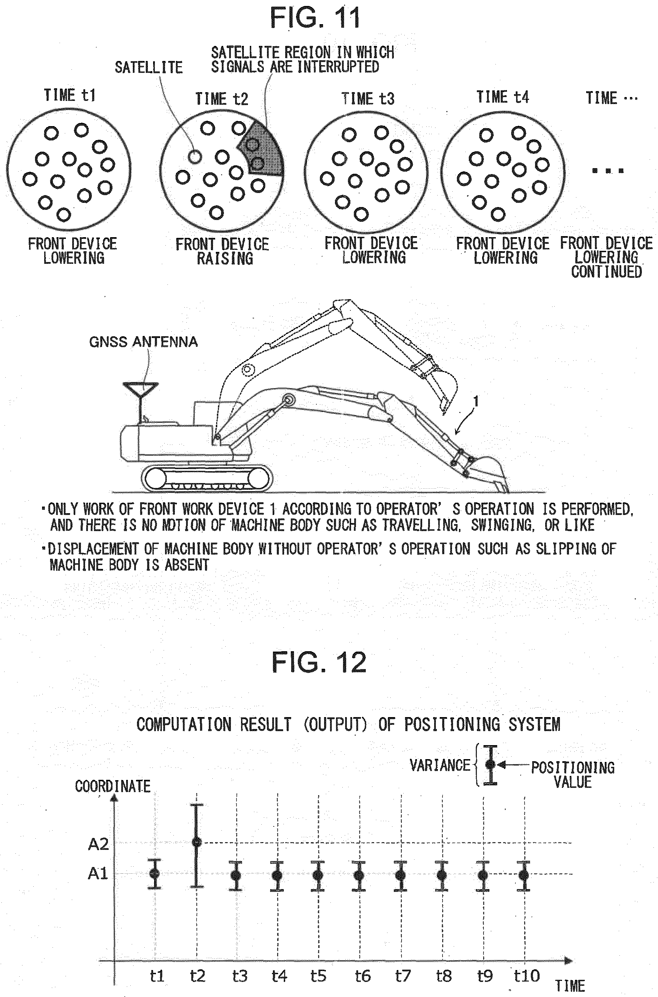

FIG. 11 shows an example of changes in time series with regard to the number and arrangement of satellites from which reception can be performed by the GNSS antennas (satellite positioning environment) in a condition in which the hydraulic excavator has only the front work device 1 in motion (conditions in which an antenna coordinate is fixed to A1). At time t1, the front work device 1 is at a lowered position. At time t2, the front work device 1 is changed from the lowered position to a raised position. Consequently, the number of satellites from which reception can be performed by the GNSS antennas at time t2 is smaller than at time t1, and the satellite arrangement is more unbalanced than at time t1. That is, the satellite positioning environment (DOP) at time t2 is degraded from that at time t1. At time t3, the front work device 1 is changed from the raised position to the lowered position again. Thus, the satellite positioning environment at time t3 is improved from time t2, and is similar to that at time t1. From time t4 onward, the lowered position of the front work device 1 is continued, and the satellite positioning environment similar to that at time t1 is continued.

FIG. 12 shows computation results of the positioning system (the position of the GNSS antennas and the variance thereof) in response to the time series changes in the satellite positioning environment shown in FIG. 11 in the condition in which the antenna coordinate is fixed to A1. Although the satellite positioning environment is degraded at time t2, the positioning system 30 performs highly accurate RTK-FIX positioning computation at all of times t1 to t10. Since the satellite positioning environment is degraded at time t2 as shown in FIG. 11, the position as a computation result of the positioning system 30 is changed at time t2 from the coordinate A1 at time t1 to A2. Further, due to the degradation in the satellite positioning environment at time t2, the position variance value as a computation result of the positioning system 30 at time t2. is larger than the variance value at time t1. From time t3 onward, the satellite positioning environment is restored to the state at time t1. Therefore, from time t3 onward, the variance value as a computation result of the positioning system 30 is of substantially the same magnitude as the variance value at time t1. That is, the magnitude of the variance value as a computation result of the positioning system 30 can be regarded as an index indicating the quality of the satellite positioning environment.

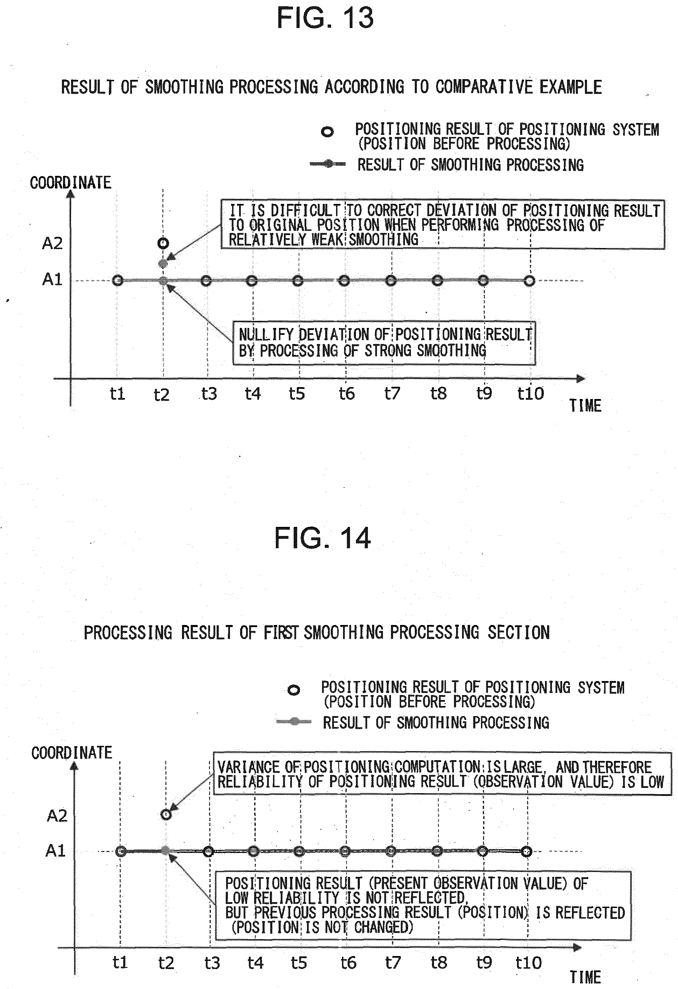

FIG. 13 shows a result of subjecting the position as computation results of the positioning system 30 shown in FIG. 12 to the smoothing processing of the technology according to the comparative example. The technology according to the comparative example subjects the positioning result of the positioning system 30 to smoothing processing that is to suppress variation in the positioning result without using the variance as a computation result of the positioning system 30. It is therefore necessary to design a filter that performs strong smoothing (for example, an LPF with a relatively large time constant) such that the position information corrected by the smoothing does not change during a period from time t1 to time t3. When the filter performing the strong smoothing is used, the processing result of the filter (position obtained by correcting the positioning result) continues to be maintained at the coordinate A1, as shown in FIG. 13. However, the use of the filter performing such strong smoothing may cause a response delay when the machine body (GNSS antennas) is actually displaced, because the position corrected by the smoothing of the filter does not follow the actual displacement. This problem will be described later. When a filter that performs relatively weak smoothing (for example, an LPF with a relatively small time constant) is used in consideration of this problem, the position corrected by the smoothing of the filter is shifted from the coordinate A1 to the A2 side during the period from time t1 to time t3.

On the other hand, FIG. 14 shows a result of subjecting the positioning result of the positioning system 30 shown in FIG. 12 to the smoothing processing of the first smoothing processing section 65 according to the present embodiment. The first smoothing processing section 65 changes the strength of the smoothing by using the variance as a computation result of the positioning system 30. Even when the positioning result of the positioning system 30 at time t2 is greatly shifted from the coordinate A1 and becomes A2 due to the degradation in the satellite positioning environment, the variance value as a computation result of the positioning system 30 becomes very large as compared with the other times t1 and t3 to t10 according to the degradation in the satellite positioning environment (see FIG. 12). Therefore, the positioning result of the positioning system 30 can be corrected to be substantially the same as the computation result A1 of the positioning system 30 at time t1 by subjecting the positioning result of the positioning system 30 to the first smoothing processing that is to increase the degree of smoothing as the variance value as a computation result of the positioning system 30 becomes larger. For example, when the above-described KF is used as the first smoothing processing section 65, the update gain $K_k$ in (Formula 9) becomes very small, and (Formula 8) can be regarded as $^\wedge x_{k|k} = {}^\wedge x_{k|k-1}$. In the case of the KF that uses (Formula 10) using only the position information, $^\wedge x_{k|k-1} = {}^\wedge x_{k-1|k-1}$, and therefore the position as a processing result of the first smoothing processing section 65 (corrected position) at time t2 coincides with the positioning result at time t1, as shown in FIG. 14.

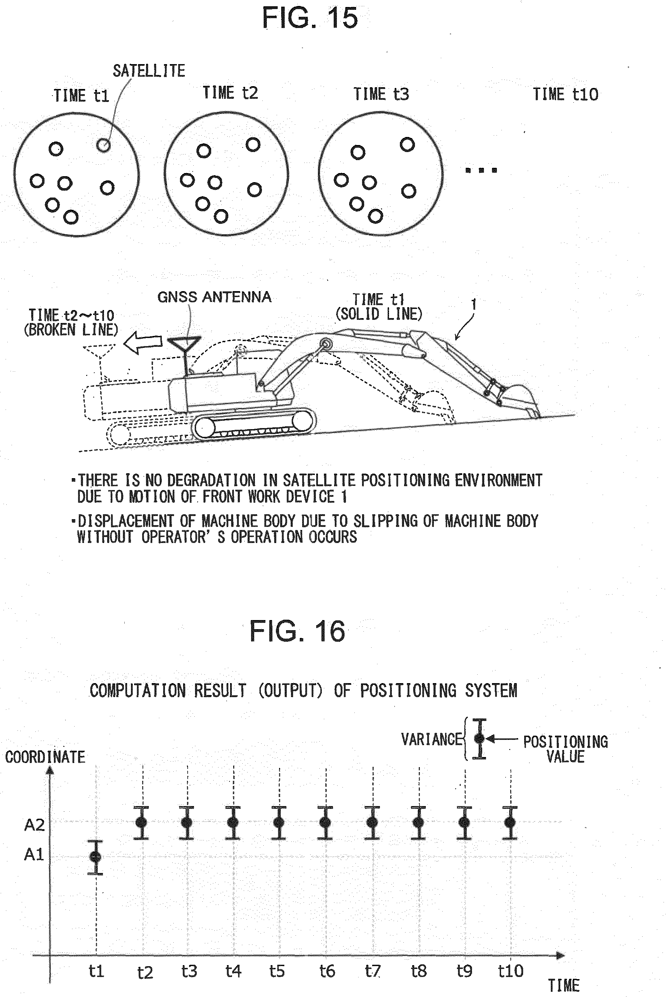

It is to be noted that while the position information as a processing result of the first smoothing processing section 65 according to the present embodiment and the position information as a processing result of the technology according to the comparative example represent similar results, computation contents differ. Next, referring to FIGS. 15 to 18, description will be made of differences in action, which are caused by differences between the smoothing processing of the first smoothing processing section 65 according to the present embodiment and the smoothing processing of the technology according to the comparative example.

FIG. 15 shows a case where during work of the front work device 1 without travelling and swinging, the coordinate of the GNSS antennas is A1 at time t1, and at time t2, the lower track structure 2 (machine body) slips and the actual position of the GNSS antennas is changed to the coordinate A2. During a period from time t1 to t10, there is no interruption or the like of the positioning signals by motion of the front work device 1, and the satellite positioning environment (DOP) is excellent.

FIG. 16 shows computation results of the positioning system 30 (the position and the variance thereof) in a case where a displacement of the coordinate of the GNSS antennas (displacement from A1 to A2) without operator's operation, occurs under the excellent satellite positioning environment. Because of the continuation of the excellent satellite positioning environment, the positioning system 30 maintains the highly accurate RTK-FIX positioning computation at all of times t1 to t10, and the variance value as a computation result of the positioning system 30 remains a relatively small value during the period from time t1 to t10. Due to the slipping of the machine body at time t2, as shown in FIG. 16, the positioning result of the positioning system 30 is changed at time t2 from the coordinate A1 at time t1 to A2. From time t3 onward, there is no displacement (slipping) of the machine body, and consequently the positioning results of the positioning system 30 are substantially the same as the coordinate A2 as a positioning result at time t2.

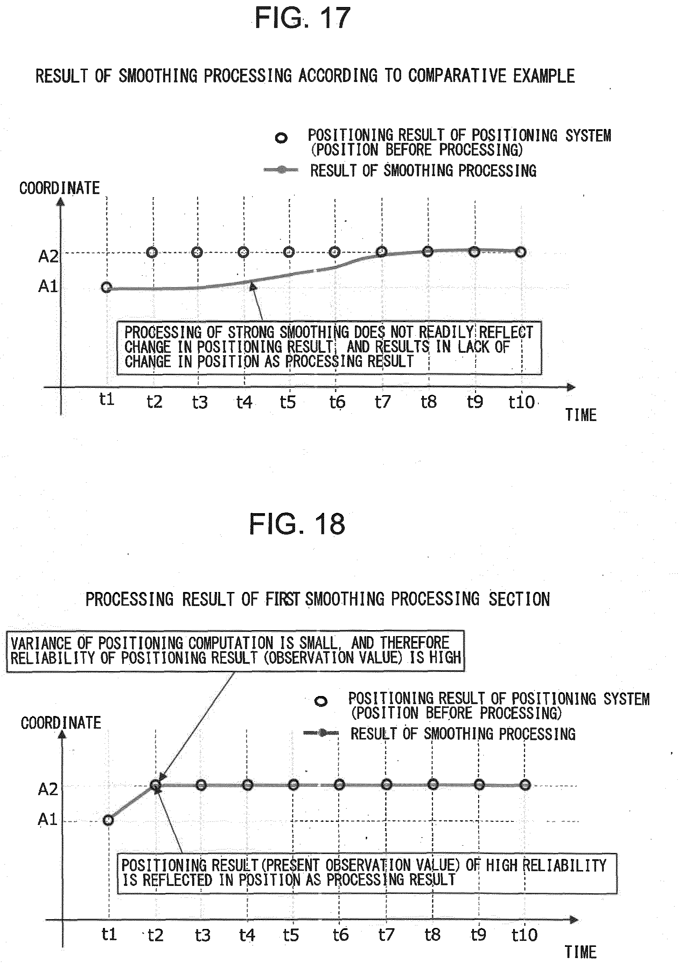

FIG. 17 shows a processing result in a case where the computation result (output) of the positioning system 30 shown in FIG. 16 is subjected to the smoothing processing of the technology according to the comparative example shown in FIG. 13. The front work device 1 is activated while the machine body does not travel and swing (there is no displacement of the GNSS antennas), and the positioning system 30 is performing RTK-FIX positioning computation. Thus, the technology according to the comparative example performs processing similar to the smoothing processing shown in FIG. 13. That is, the technology according to the comparative example nullifies, by the smoothing processing, the change in the positioning result of the positioning system 30 from the coordinate A1 to A2 (change following the actual displacement) during the period from time t1 to t2. Further, because the smoothing processing is continued from time t3 onward, the position (coordinate) corrected by the smoothing processing does not become the actual coordinate A2 of the GNSS antennas until a time a few steps ahead, as shown in FIG. 17.

In order to resolve the response delay caused by the smoothing processing of the technology according to the comparative example and make the corrected position follow the actual displacement, the smoothing processing needs to be weakened. However, the smoothing processing of the technology according to the comparative example does not distinguish the change in the positioning result of the positioning system 30, which is caused by the degradation in the satellite positioning environment as shown in FIG. 12, from the change in the positioning result of the positioning system 30, which corresponds to the actual displacement of the GNSS antennas as shown in FIG. 16. Hence, when weak smoothing processing is adopted as the smoothing processing according to the comparative example, it is difficult to correct the change in the positioning result of the positioning system 30 at time t2, which is caused by the degradation in the satellite positioning environment as shown in FIG. 13, to the original position (actual position A1).

On the other hand, FIG. 18 shows a result obtained when the computation result (output) of the positioning system 30 shown in FIG. 16 is subjected to the smoothing processing of the first smoothing processing section 65 according to the present embodiment. The first smoothing processing section 65 increases the degree of smoothing as the variance value as a computation result of the positioning system 30 becomes larger. Hence, when the variance value as a computation result of the positioning system 30 is a relatively small value as shown in FIG. 16, the first smoothing processing section 65 performs relatively weak smoothing at time t2 shown in FIG. 18 as compared with the smoothing at time t2 shown in FIG. 14. Hence, as shown in FIG. 18, the positioning result of the positioning system 30 at time t2 is reflected in the position corrected by the first smoothing processing section 65, and the position corrected by the first smoothing processing section 65 falls in the vicinity of the coordinate A2 following the actual displacement of the GNSS antennas. Thus, the present embodiment changes the strength of smoothing according to the magnitude of the variance value as a computation result of the positioning system 30, and can therefore provide highly accurate position information with response delay suppressed in response to a displacement of the machine body (GNSS antennas) which does not cause such a change as increases the variance.

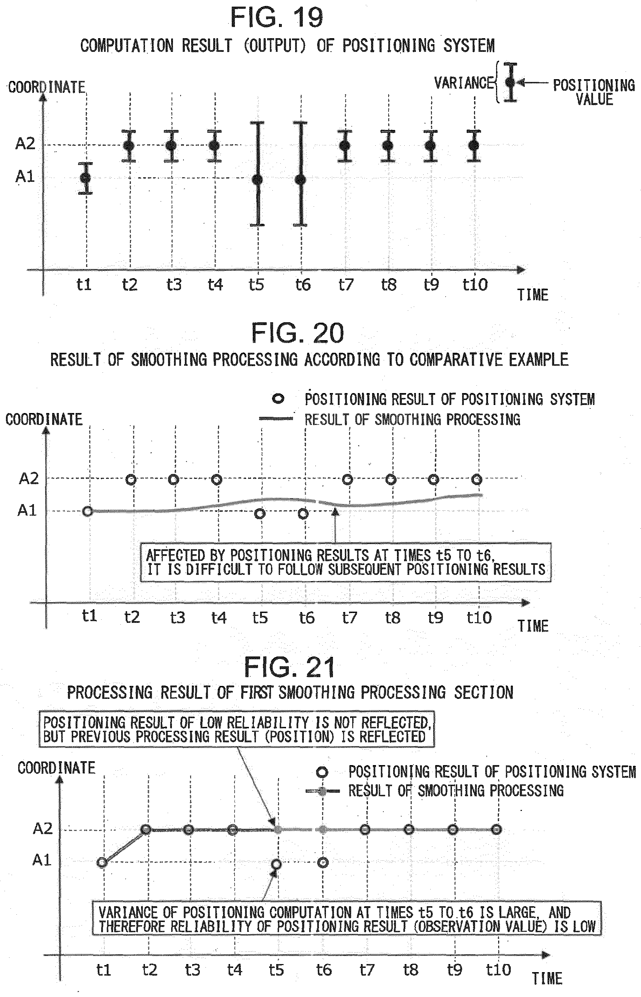

Next, a processing result of the first smoothing processing section according to the present embodiment in a case where the condition shown in FIG. 15 and the condition shown in FIG. 11 occur at a time interval from each other will be described with reference to FIGS. 19 to 21 while compared with the technology according to the comparative example. Specifically, as in the case shown in FIG. 15 and FIG. 16, a condition occurs in which the actual position of the GNSS antennas changes at time t2 from the coordinate A1 to A2 without depending on operator's operation, and the actual position does not change from the coordinate A2 from time t3 onward. Further, at times t5 to t6, as in the case at time t2 shown in FIG. 11 and FIG. 12, a condition occurs in which the satellite positioning environment is degraded due to motion of the front work device 1.

FIG. 19 shows computation results of the positioning system 30 (the position and the variance thereof) in response to changes in the satellite positioning environment under the condition where a displacement of the GNSS antennas (displacement from the coordinate A1 to A2) without operator's operation occurs and the condition where there is no displacement of the GNSS antennas. The positioning result of the positioning system 30 at time t2 changes from the coordinate A1 at time t1 to A2 so as to follow the actual displacement of the GNSS antennas. At times t3 to t4, the GNSS antennas are not actually displaced, and therefore the positioning results of the positioning system 30 are also substantially the same as the coordinate A2 as a positioning result at time t2. At times t5 to t6, due to a degradation in the satellite positioning environment, the positioning results of the positioning system 30 change from the coordinate A2 at time t4 to A1 (variation occurs in the positioning result), and the variance value as computation results of the positioning system 30 is relatively larger than the variance value at time t4. From time t7 onward, there is no actual displacement of the GNSS antennas, and the degradation in the satellite positioning environment is improved, so that the positioning results of the positioning system 30 are substantially the same as a computation result at time t4 before the degradation in the satellite positioning environment.

FIG. 20 shows a result obtained when the computation results (outputs) of the positioning system 30 shown in FIG. 19 are subjected to the smoothing processing of the technology according to the comparative example. As described earlier, the smoothing according to the comparative example nullifies the change from the coordinate A1 as a computation result at time t1 to the position A2 at time t2 (change following the actual displacement) by subjecting the positioning result of the positioning system 30 to strong smoothing processing. Therefore, the position corrected at time t2 comes to a result such that the coordinate A1 at time t1 tries to be maintained. In addition, the positioning results of the positioning system 30 at times t5 to t6 vary from the coordinate A2 to A1. Thus, the position corrected by the smoothing processing according to the comparative example comes to exhibit such behavior as to try to maintain the coordinate A1 as the positioning results of the positioning system 30 at times t5 to t6. Therefore, from time t7 onward, even when the positioning result of the positioning system 30 returns from the coordinate A1 at time t6 to the coordinate A2 as the actual position of the GNSS antennas, the corrected position information comes not to coincide with the coordinate A2, and a response delay occurs. That is, it is difficult for the smoothing processing according to the comparative example to provide highly accurate position information when a displacement of the GNSS antennas, which is not caused by operator's operation, and a degradation in the satellite positioning environment occur.

On the other hand, FIG. 21 shows a result obtained when the computation results (outputs) of the positioning system 30 shown in FIG. 19 are subjected to the smoothing processing of the first smoothing processing section 65 according to the present embodiment. As shown in FIG. 19, the variance value as a computation result of the positioning system 30 at time t2 is sufficiently small, and therefore the first smoothing processing section 65 performs relatively weak smoothing, as described earlier. Hence, as in the case shown in FIG. 14, the positioning result of the positioning system 30 is reflected in the position (coordinate) corrected by the first smoothing processing section 65, and the position (coordinate) corrected by the first smoothing processing section 65 converges to the coordinate A2 so as to follow the actual displacement of the GNSS antennas. On the other hand, at times t5 to t6, as shown in FIG. 19, the variance values as computation results of the positioning system 30 are relatively larger than at the other times t1 to t4 and t7 to t10, and therefore the first smoothing processing section 65 performs relatively stronger smoothing than at the other times t1 to t4 and t7 to t10, as described earlier. Consequently, the positioning results of the positioning system 30 at times t5 to t6 are not reflected in the position corrected by the first smoothing processing section 65, and the position corrected by the first smoothing processing section 65 thus comes to a result such that the coordinate A2 as a processing result at time t4 is maintained. Thus, highly accurate position information can be provided even when a displacement of the GNSS antennas without operator's operation and a degradation in the satellite positioning environment occur. That is, it is possible to obtain highly accurate position information that achieves both of the alleviation of the effect of variation in the positioning result of the positioning system 30 and the following of the actual displacement (suppression of a response delay).

As described above, the hydraulic excavator (construction machine) according to the first embodiment of the present invention includes: the machine body (the lower track structure 2 and the upper swing structure 3); the front work device 1 (work device) attached to the machine body 2 and 3 in a raiseable and lowerable manner; the GNSS antennas 31 and 32 (antenna) that are attached to the machine body 2 and 3, and receive positioning signals from the plurality of satellites; the machine body IMU 25 (first sensor) that senses information on the posture and motion of the machine body 2 and 3; the IMUs 26, 27, and 28 (second sensor) that sense information on the posture of the front work device 1 (work device); and the computing device (the GNSS receiver 33 and the controller 40) that computes posture information indicating the postures of the machine body 2 and 3 and the front work device 1 (work device). The computing device (the GNSS receiver 33 and the controller 40) is configured to perform positioning computation that is to compute the position of the machine body 2 and 3 and the variance value of the position of the machine body 2 and 3 based on the positioning signals from the plurality of satellites received by the GNSS antennas 31 and 32 (antenna), subject the position of the machine body 2 and 3 obtained by the positioning computation to the first smoothing processing that is to increase the degree of smoothing as the magnitude of the variance value of the position of the machine body 2 and 3 obtained by the positioning computation becomes larger, and compute the posture information based on a result of the first smoothing processing, the information sensed by the machine body IMU 25 (first sensor), and the information sensed by the IMUs 26, 27, and 28 (second sensor).

According to this configuration, even when variation in the position as a result of the positioning computation becomes large due to a degradation in the satellite positioning environment, the variance value as a result of the positioning computation is increased, and therefore, by correspondingly strengthening smoothing on the position as a result of the positioning computation, it is possible to obtain position information in which the variation in the position as a result of the positioning computation is suppressed. In addition, when a movement of the machine body 2 and 3 occurs without operator's operation, the variance value as a result of the positioning computation hardly changes unless the satellite positioning environment is degraded, and therefore position information following the movement of the machine body 2 and 3 can be obtained by smoothing the position as a result of the positioning computation with a strength corresponding to the magnitude of the variance value as a. result of the positioning computation. That is, even when variation occurs in computation result of the satellite positioning or even when a movement of the own machine occurs without operator's operation, it is possible to obtain the posture information of the hydraulic excavator (construction machine) based on accurate position information of the own machine.

In addition, the positioning computation of the GNSS receiver 33 (part of the computing device) according to the present embodiment is further to compute the speed of the machine body 2 and 3 and the variance value of the speed of the machine body 2 and 3 on the basis of the positioning signals from the plurality of satellites received by the GNSS antennas 31 and 32. In addition, the first smoothing processing of the controller 40 (part of the computing device) is to set, as input information, the position of the machine body 2 and 3 and the speed of the machine body 2 and 3 obtained by the positioning computation, and to perform smoothing processing with the strength of smoothing changed according to the magnitude of the variance value of the position of the machine body 2 and 3 obtained by the positioning computation, and the magnitude of the variance value of the speed of the machine body 2 and 3 obtained by the positioning computation.

According to this configuration, information on the speed and the variance value thereof as results of the positioning computation is added in the first smoothing processing. Thus, in addition to the presence or absence of reliability of the position as a result of the positioning computation, the presence or absence of reliability of the speed as a result of the positioning computation is reflected in the result of the first smoothing processing. Hence, when a position as a result of the positioning computation changes momentarily, and there is no variation in the speed as a result of the positioning computation, probability that there is no actual displacement is increased, so that an effect of suppressing variation in the position information can be enhanced.

In addition, the controller 40 (part of the computing device) according to the present embodiment further makes a motion determination that is to determine whether or not the machine body 2 and 3 is in motion based on a sensing result of the machine body IMU 25 (first sensor), and performs the second smoothing processing that is to further smooth the first smoothing processing. The posture information of the controller 40 is computed based on the result of the second smoothing processing, the information sensed by the machine body IMU 25 (first sensor), and the information sensed by the IMUs 26, 27, and 28 (second sensor). In addition, the strength of smoothing of the second smoothing processing is set to be stronger in a case where it is determined in the motion determination that the machine body 2 and 3 is motionless than in a case where it is determined in the motion determination that the machine body 2 and 3 is in motion.

According to this configuration, by changing the strength of smoothing according to the presence or absence of motion of the machine body 2 and 3, it is possible to suppress variation in result of the positioning computation when the machine body 2 and 3 is motionless, and obtain position information following an actual displacement during motion of the machine body 2 and 3 (suppress a response delay caused by smoothing processing).

In addition, the first smoothing processing of the controller 40 (part of the computing device) according to the present embodiment uses a statistical filter (for example a KF, a GSF, or a particle filter) that performs smoothing processing including statistical processing, and the variance value as a result of the positioning computation is used as an input value of the statistical filter.

According to this configuration, this statistical filter inherently has a function of changing the strength of smoothing according to the magnitude of the variance value. Thus, the configuration including the statistical filter is made simpler than that including a filter (for example, an LPF) that does not perform statistical processing and does not inherently have the function.

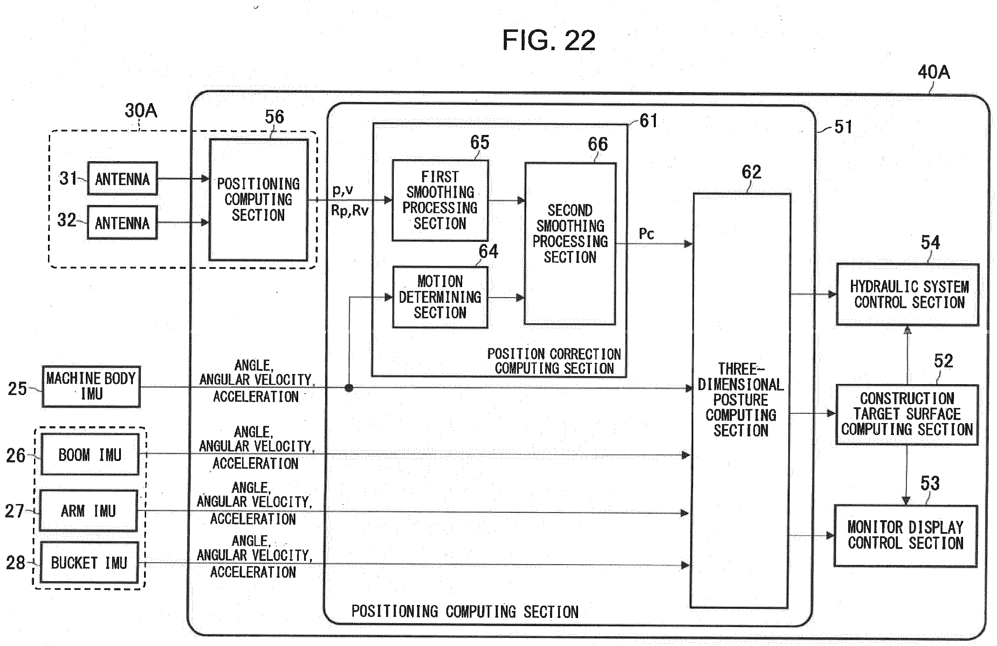

A construction machine according to a modification of the first embodiment of the present invention will next be described with reference to FIG. 22. FIG. 22 is a block diagram showing a functional configuration of a controller in the construction machine according to the modification of the first embodiment of the present invention. Incidentally, in FIG. 22, the same reference numerals as the reference numerals shown in FIGS. 1 to 21 represent similar parts, and therefore detailed description thereof will be omitted.

The construction machine according to the modification of the first embodiment of the present invention is different from the first embodiment in that the positioning computation performed by the GNSS receiver 33 (see FIG. 6) in the first embodiment is performed by a controller 40A instead. Specifically, the hydraulic excavator according.to the present modification does not include the GNSS receiver 33 of the first embodiment, but the controller 40A further includes a positioning computing section 56 that performs similar positioning computation to that of the GNSS receiver 33. That is, the positioning computing section, 56 computes, in each computation cycle, the information of the position p and speed v of the GNSS antennas 31 and 32 (machine body) and the variance values Rp and Rv thereof on the basis of the positioning signals received by the GNSS antennas 31 and 32. As with the GNSS receiver 33 of the first embodiment, the positioning computing section 56 outputs results of the positioning computation to the position correction computing section 61. The computation results of the positioning computing section 56 are similar to the computation results of the GNSS receiver 33 of the first embodiment.

A correcting computation (smoothing processing) of the position correction computing section 61 on the computation results of the positioning computing section 56 is similar to that in the case of the first embodiment. In addition, a procedure for computation processing of the positioning computing section 51 of the controller 40A is similar to the flowchart showing the procedure for the computation processing of the positioning computing section 51 according to the first embodiment. (see FIG. 10).

Incidentally, the GNSS antennas 31 and 32 and the positioning computing section 56 of the controller 40A constitute a positioning system 30A. In addition, the controller 40A including the positioning computing section 56 constitutes a computing device that computes the posture information of the hydraulic excavator.

According to the above-described construction machine according to the modification of the first embodiment of the present invention, as in the foregoing first embodiment, it is possible to obtain the posture information of the hydraulic excavator (construction machine) based on accurate position information of the own machine even when variation occurs in computation result of the satellite positioning or even when a displacement of the own machine occurs without operator's operation.

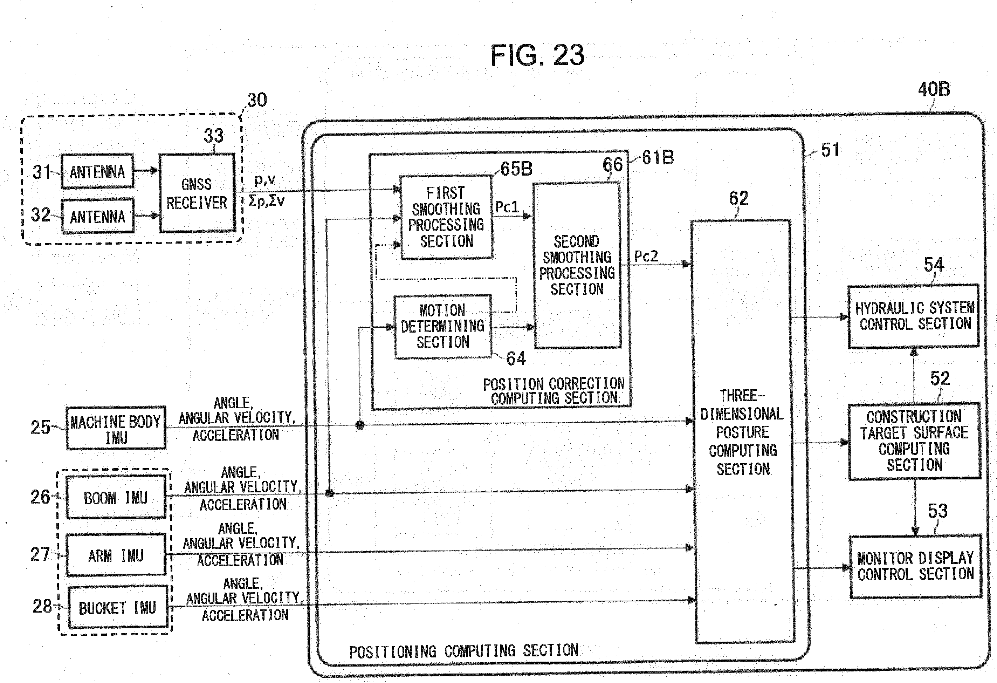

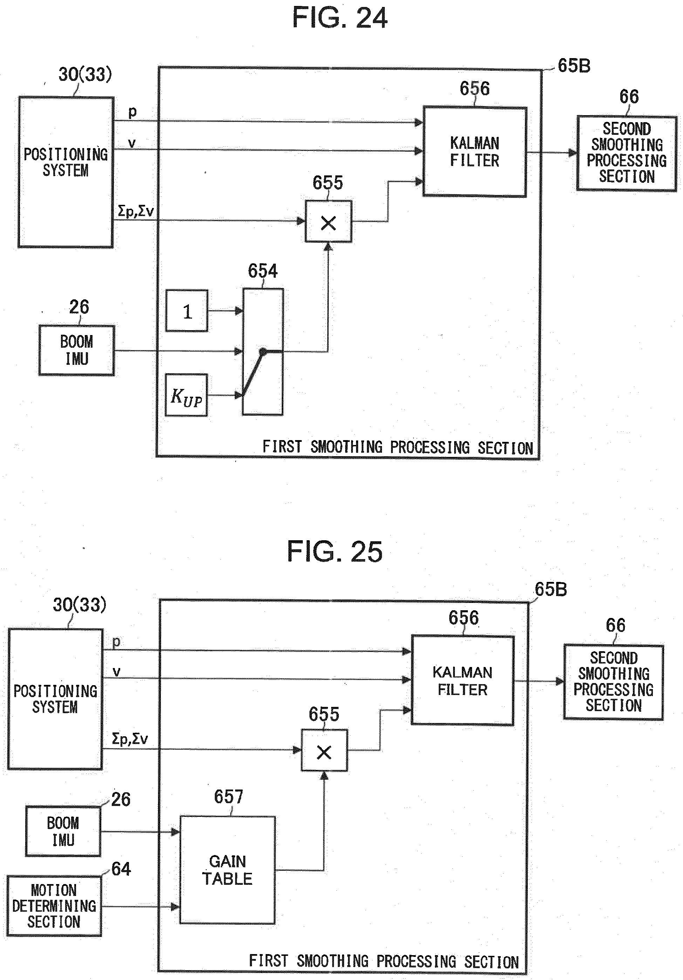

Construction machines according to a first example and a second example of a second embodiment of the present invention will next be described with reference to FIGS. 23 to 25. FIG. 23 is a block diagram showing a functional configuration of a controller in the construction machine according to the second embodiment of the present invention. FIG. 24 is a block diagram showing a functional configuration of a first example of a first smoothing processing section constituting a part of a position correction computing section of the controller shown in FIG. 23. FIG. 25 is a block diagram showing a functional configuration of a second example of the first smoothing processing section constituting a part of the position correction computing section of the controller shown in FIG. 23. Incidentally, in FIGS. 23 to 25, the same reference numerals as the reference numerals shown in FIGS. 1 to 22 represent similar parts, and therefore detailed description thereof will be omitted.

The construction machine according to the second embodiment of the present invention shown in FIG. 23 is different from the first embodiment in that a first smoothing processing section 65B of a position correction computing section 61B of a controller 40B corrects the magnitude of the variance value as a result of the positioning computation of the positioning system 30 according to the posture of the front work device 1, and changes the strength of smoothing according to the magnitude of the corrected variance value. As described earlier, the satellite positioning environment may change according to a change in the posture of the front work device 1 in the hydraulic excavator. When the front work device 1 is positioned in a specific region that is a region in which the front work device 1 degrades reception of the positioning signals on the GNSS antennas 31 and 32, the satellite positioning environment is worse than in a case where the front work device 1 is positioned in other regions. For example, when the front work device 1 is at the raised position, the satellite positioning environment can be estimated to be worse than when the front work device 1 is at the lowered position. The present embodiment changes the strength of the first smoothing processing by utilizing a fact that the satellite positioning environment changes according to a change in the posture of the front work device 1. It can be determined whether or not the front work device 1 is positioned in the specific region, for example, based on a sensing result of the boom IMU 26 (angle of the boom 6) that can sense information on the posture of the front work device 1.

When the first smoothing processing section 65B of the construction machine according to the first example of the second embodiment of the present invention shown in FIG. 23 and FIG. 24 determines that the front work device 1 is positioned in the specific region, the first smoothing processing section 65B corrects the variance value as a computation result of the positioning system 30 such that the variance value becomes larger than in a case where the front work device 1 is not positioned in the specific region, and then the first smoothing processing section 65B changes the strength of smoothing according to the magnitude of the corrected variance value. On the other hand, when it is determined that the front work device 1 is not positioned in the specific region, the variance value as a computation result of the positioning system 30 is not corrected, and the strength of smoothing is changed according to the magnitude of the variance value.

Specifically, as shown in FIG. 24, for example, the first smoothing processing section 65B according to the first example includes: a selecting section 654 that selects an output value according to the posture of the front work device 1; a multiplying section 655 that multiplies the variance values Rp and Rv as computation results of the positioning system 30 by the output value from the selecting section 654; and a KF 656 that sets, as input values thereof, information of the position p and the speed v as computation results of the positioning system 30 and an output value from the multiplying section 655. The selecting section 654, for example, outputs one when the selecting section 654 determines, based on the sensing result of the boom IMU 26, that the posture of the front work device 1 is a boom-lowered posture (the front work device 1 is not positioned in the specific region). When the selecting section 654 determines that the posture of the front work device 1 is a boom-raised posture (the front work device 1 is positioned in the specific region), on the other hand, the selecting section 654 switches so as to output a positive number $K_{up}$ larger than one. The selecting section 654, for example, determines that the boom is raised when a boom angle sensed by the boom IMU 26 exceeds a threshold value, whereas otherwise (when the boom angle is equal to or less than the threshold value), the selecting section 654 determines that the boom is not raised. The KF 656 is similar to the above-described KF used in the processing of the first smoothing processing section 65 according to the first embodiment. Values input to variance terms of the KF 656 change according to the posture of the front work device 1. Supposing that the variance values as computation results of the positioning system are $\Sigma p$ and $\Sigma v$, $K_{up}\Sigma p$ and $K_{up}\Sigma v$ are input to the variance terms of the KF in a case of boom raising, whereas $\Sigma p$ and $\Sigma v$ are input to the variance terms of the KF 656 in cases other than boom raising. Hence, when the posture of the front work device 1 is a boom-raised posture, the variance values as computation results of the positioning system 30 are corrected to become larger, and therefore the KF 656 according to the present embodiment performs processing of strengthened smoothing. Consequently, in conditions in which the satellite positioning environment is estimated to be degraded, variation in the positioning result of the positioning system 30 caused by the degradation in the satellite positioning environment can be further suppressed. On the other hand, in cases other than boom raising, the magnitudes of the variance values as computation results of the positioning system 30 are not corrected, and therefore the KF 656 according to the present embodiment performs smoothing with a strength corresponding to the magnitudes of the variance values as computation results of the positioning system 30. Consequently, in conditions in which the satellite positioning environment is not estimated to be degraded, a response delay caused by the smoothing can be suppressed.

Incidentally, any configuration is possible as long as the configuration can implement a correction that is to increase the variance values as computation results of the positioning system 30 only when the front work device 1 is assumed to be positioned in the specific region. For example, a configuration is possible in which the selecting section 654 outputs zero at a time of boom lowering, and outputs the positive number $K_{up}$ at a time of boom raising, and an adding section is used in place of the multiplying section 655. In addition, the KF 656 according to the present embodiment can be replaced with the time constant changing LPF 652 shown in FIG. 7.

Incidentally, when the hydraulic excavator travels while maintaining the boom-raised posture, the first smoothing processing section 65B according to the first example makes a correction that is to increase the variance values as computation results of the positioning system 30 according to the boom-raised posture. In this case, a result is obtained such that smoothing on the position as a computation result of the positioning system 30 is strengthened though the actual position is changing due to travelling. In this case, the position corrected by the first smoothing processing section 65B may be shifted with respect to the actual displacement of the GNSS antennas 31 and 32.

Accordingly, the first smoothing processing section 65B according to the second example of the second embodiment shown in FIG. 23 and FIG. 25 is configured to correct the magnitudes of the variance values as computation results of the positioning system 30 based on the determination result of the motion determining section 64 (the presence or absence of motion of the machine body) in addition to the posture of the front work device 1. Specifically, even when the first smoothing processing section 65B according to the second example determines that the front work device 1 is positioned in the region (specific region) in which the front work device 1 degrades the reception of the positioning signals on the GNSS antennas 31 and 32, and when the motion determining section 64 determines that the machine body is in motion, the first smoothing processing section 65B performs smoothing with a strength corresponding to the magnitudes of the variance values as computation results of the positioning system 30 without correcting the variance values. On the other hand, when it is determined that the front work device 1 is positioned in the specific region and the motion determining section 64 determines that the machine body is motionless (stationary state), the variance values as computation results of the positioning system 30 are corrected so as to be larger than when the front work device 1 is not positioned in the specific region, and then smoothing processing is performed with a strength corresponding to the magnitudes of the corrected variance values.

Specifically, the first smoothing processing section 65B according to the second example, for example, includes: a gain table 657 that computes a gain on the basis of the sensing result of the boom IMU 26 and the determination result of the motion determining section 64; a multiplying section 655 that multiplies the variance values $\Sigma p$ and $\Sigma v$ as computation results of the positioning system 30 by an output value (gain) from the gain table 657; and a KF 656 that sets, as input values thereof, information of the position p and speed v as computation results of the positioning system 30 and an output value from the multiplying section 655. The KF 656 is the same as the KF in the first example of the present embodiment. The gain table 657 is, for example, illustrated in the following Table 1. The positive number $K_{up}$ larger than one is output when the posture of the front work device 1 is a boom-raised posture and the determination result of the motion determining section 64 represents that the machine body is motionless. One is output otherwise, that is, when the posture of the front work device 1 is a boom-lowered posture, or when the posture of the front work device 1 is a boom-raised posture and the determination result of the motion determining section 64 represents that the machine body is in motion.

[Table 1]

| Gain Table | | |
|---|---|---|
| | Machine Body is Motionless | Machine Body is in Motion |
| Boom Raising | $K_{UP}$ | 1 |
| Boom Lowering | 1 | 1 |

Thus, only when the posture of the front work device 1 is a boom-raised posture (the satellite positioning environment is degraded) and the machine body is motionless (there is no displacement of the GNSS antennas 31 and 32), the variance values as computation results of the positioning system 30 are corrected to be larger. On the other hand, otherwise, the variances as computation results of the positioning system 30 are not corrected. Hence, when the hydraulic excavator travels while maintaining a boom-raised posture, the variances as computation results of the positioning system 30 are input to the filter performing smoothing processing as they are not corrected to be larger, so that the position information corrected by the first smoothing processing section 65 follows the actual position displacement.

According to the above-described construction machine according to the first example and second example of the second embodiment of the present invention, as in the foregoing first embodiment, it is possible to obtain the posture information of the hydraulic excavator (construction machine) based on accurate position information of the own machine even when variation occurs in computation result of the satellite positioning or even when a displacement of the own machine occurs without operator's operation.

In addition, the controller 40B (part of the computing device) according to the first example of the present embodiment further determines on the basis of a sensing result of the IMUs 26, 27, and 28 (second sensor) whether or not the front work device 1 (work device) is positioned in the specific region in which the front work device 1 degrades the reception of the positioning signals on the GNSS antennas 31 and 32. In addition, when it is determined that the front work device 1 (work device) is positioned in the specific region, the first smoothing processing of the controller 40B corrects the variance value of the position of the machine body 2 and 3 obtained by the positioning computation such that the variance value of the position becomes larger than in a case where the front work device 1 (work device) is not positioned in the specific region, and then performs smoothing processing with a strength corresponding to the magnitude of the corrected variance value.

According to this configuration, variation in the positioning result of the positioning system 30 caused by a degradation in the satellite positioning environment can be further suppressed by determining the condition of the satellite positioning environment based on the posture of the front work device 1 (work device).

In addition, the controller 40B (part of the computing device) according to the second example of the present embodiment further makes a motion determination that is to determine whether or not the machine body 2 and 3 is in motion based on a sensing result of the machine body IMU 25 (first sensor). In addition, the first smoothing processing of the controller 40B is to perform smoothing with a strength corresponding to the magnitude of the variance value of the position of the machine body obtained by the positioning computation, without correcting the variance value of the position of the machine body obtained by the positioning computation, when it is determined that the front work device 1 (work device) is positioned in the specific region and it is determined that the machine body 2 and 3 is in motion. The first smoothing processing of the controller 40B is to correct, when it is determined that the front work device 1 (work device) is positioned in the specific region and it is determined that the machine body 2 and 3 is motionless, the variance value of the position of the machine body 2 and 3 obtained by the positioning computation such that the variance value of the position becomes larger than in the case where the front work device 1 (work device) is not positioned in the specific region, and then perform smoothing with a strength corresponding to the magnitude of the corrected variance value.

According to this configuration, in other than a case where the satellite positioning environment is degraded and the position of the GNSS antennas 31 and 32 is not changed, the variance value as a result of the positioning computation is not corrected to be larger. Thus, a response delay in the processing result (corrected position) of the first smoothing processing section 65 can be prevented when the hydraulic excavator travels while maintaining a boom-raised posture.

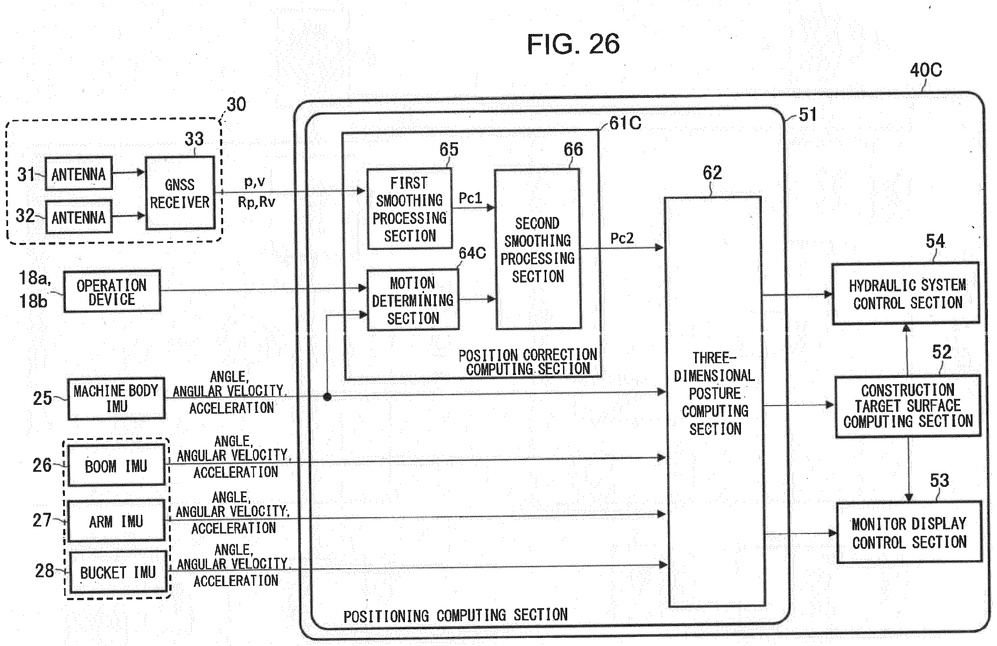

A construction machine according to the third embodiment of the present invention will next be described with reference to FIG. 26. FIG. 26 is a block diagram showing a functional configuration of a controller in the construction machine according to the third embodiment of the present invention. Incidentally, in FIG. 26, the same reference numerals as the reference numerals shown in FIGS. 1 to 25 represent similar parts, and therefore detailed description thereof will be omitted.

The construction machine according to the third embodiment of the present invention shown in FIG. 26 is different from the first embodiment in that a motion determining section 64C of a position correction computing section 61C of a controller 40C determines the presence or absence of motion of the machine body on the basis of operation of the operation devices 18a and 18b for machine body operation in addition to sensing results of the machine body IMU 25. Specifically, as in the first embodiment, the motion determining section 64C determines whether or not the machine body (upper swing structure 3) is in motion based on the sensing results of the machine body IMU 25. It is thereby possible to sense a displacement of the machine body without operator's operation, for example slipping of the lower track structure 2. Further, when a valid operation of the operation device 18a or 18b for machine body operation, for example an operation device for travelling or for swinging is performed, the motion determining section 64 determines that the machine body is in motion. This means that it is determined that the machine body is in motion before the machine body IMU 25 senses motion of the machine body (change in the sensed value of the machine body IMU 25) because the operator has an intention of operating the machine body in a case where the operator operates the operation device 18a or 18b. Determination in advance for the motion of the machine body which will occur "a few time intervals ahead" allows the strength of smoothing according to the presence or absence of motion of the machine body to be changed in appropriate timing.

In addition, when swing motion is performed at an extremely slow speed, changes in the sensed values of the machine body IMU 25 are very small, and therefore it may be difficult to determine the swing motion even when any of the conditional expressions of (Formula 1) to (Formula 5) is used. On the other hand, the motion determining section 64C determines the presence or absence of motion of the machine body based on operation of the operation devices 18a and 18b, and therefore swing motion at an extremely slow speed can be determined correctly. Consequently, excessive smoothing of the second smoothing processing section 66 can be prevented. It is therefore possible to suppress a response delay caused by the smoothing of the second smoothing processing section 66.

According to the above-described construction machine according to the third embodiment of the present invention, as in the foregoing first embodiment, it is possible to obtain the posture information of the hydraulic excavator (constructionmachine) based on accurate position information of the own machine even when variation occurs in computation result of the satellite positioning or even when a movement of the own machine occurs without operator's operation.

In addition, the hydraulic excavator (construction machine) according to the present embodiment further includes: the operation devices 18a and 18b for operating the machine body (the lower track structure 2 and the upper swing structure 3); and a third sensor (operation devices 18a and 18b) that senses operation of the operation devices 18a and 18b. Further, the motion determination of the controller 40C (part of the computing device) is to determine that the machine body 2 and 3 is in motion when the machine body IMU 25 (first sensor) senses motion of the machine body 2 and 3 or when the operation devices 18a and 18b (third sensor) senses operation of the operation devices 18a and 18b.

According to this configuration, motion of the machine body 2 and 3 "a few time intervals ahead" is takes into consideration by sensing operation of the operation devices 18a and 18b, which reflects an intention of the operator who operates the machine body 2 and 3. This allows the second smoothing processing section 66, which changes the strength of smoothing according to the presence or absence of motion of the machine body 2 and 3, to weaken smoothing before the machine body 2 and 3 is actually displaced. Consequently, a response delay caused by the smoothing of the second smoothing processing section 66 can be suppressed. It is therefore possible to obtain position information that follows an actual displacement of the machine body 2 and 3.

[Other Embodiments]

It is to be noted that while an example in which the present invention is applied to a hydraulic excavator has been illustrated in the foregoing embodiments, the present invention is widely applicable to various kinds of construction machines that control, on the basis of the position information of the own machines, a work device or the like that changes in position and posture.

In addition, the present invention is not limited to the present embodiments, but includes various modifications.

The foregoing embodiments have been described in detail in order to describe the present invention in an easily understandable manner, and are not necessarily limited to embodiments including all of the described configurations. A part of a configuration of a certain embodiment can be replaced with a configuration of another embodiment, and a configuration of another embodiment can be added to a configuration of a certain embodiment. In addition, for a part of a configuration of each embodiment, another configuration can be added, deleted, or substituted.

For example, in the foregoing embodiments, an example has been illustrated in which the operation devices 18a and 18b are constituted by operation devices of an electric type. However, the operation devices can also be constituted by operation devices of a hydraulic type. In a case of this configuration, the hydraulic actuators 4, 10, 11, 12, and 14a are driven by supplying an operation pilot pressure corresponding to the operation direction and the operation amount of each operation device as a driving signal to the control valves of the control valve unit 23. The operation direction and the operation amount of the operation device can be sensed by a pressure sensor that senses the operation pilot pressure generated by the operation device. That is, the pressure sensor functions as a sensor that senses operation (the operation direction and the operation amount) of the operation device.

In addition, in the foregoing second embodiment, a configuration has been illustrated in which it is determined, on the basis of a sensing result of the boom IMU 26, whether or not the front work device 1 is positioned in the specific region where the front work device 1 degrades the reception of the positioning signals on the GNSS antennas 31 and 32. However, a configuration is also possible in which it is determined, on the basis of sensing results of the three IMUs 26, 27, and 28 that sense the posture of the front work device 1, whether or not the front work device 1 is positioned in the specific region.

Description of Reference Characters

1: Front work device (work device)
2: Lower track structure (machine body)
3: Upper swing structure (machine body)
25: Machine body IMU (first sensor)
26: Boom IMU (second sensor)
27: Arm IMU (second sensor)
28: Bucket IMU (second sensor)
31, 32: GNSS antenna (antenna)
33: GNSS receiver (computing device)
40: Controller (computing device)
18a, 18b: Operation device (third sensor)

**Claims**

1. A construction machine comprising:

a machine body (2, 3);
a work device (1) attached to the machine body (2, 3) in a raiseable and lowerable manner;
an antenna (31, 32) that is attached to the machine body (2, 3), and receives positioning signals from a plurality of satellites;
a first sensor (25) that senses information on a posture and motion of the machine body (2, 3);
a second sensor (26, 27, 28) that senses information on a posture of the work device (1); and
a computing device (33, 40) that computes posture information indicating the postures of the machine body (2, 3) and the work device (1), wherein
the computing device (33, 40) is configured to
perform positioning computation that is to compute a position of the machine body (2, 3) and a variance value of the position of the machine body (2, 3) on a basis of the positioning signals from the plurality of satellites, the positioning signals being received by the antenna (31, 32),
subject the position of the machine body (2, 3) obtained by the positioning computation to first smoothing processing, the first smoothing processing being to increase a degree of smoothing as magnitude of the variance value of the position of the machine body (2, 3) obtained by the positioning computation becomes larger, and compute the posture information based on a result of the first smoothing processing, the information sensed by the first sensor (25), and the information sensed by the second sensor (26, 27, 28).

2. The construction machine according to claim 1, wherein

the positioning computation of the computing device (33, 40) is further to compute a speed of the machine body (2, 3) and a variance value of the speed of the machine body (2, 3) on a basis of the positioning signals from the plurality of satellites, the positioning signals being received by the antenna (31, 32), and
the first smoothing processing of the computing device (33, 40) is to set the position of the machine body (2, 3) and the speed of the machine body (2, 3) obtained by the positioning computation as input information, and to perform smoothing processing with strength of smoothing changed according to magnitude of the variance value of the position of the machine body (2, 3), and magnitude of the variance value of the speed of the machine body (2, 3), the variance value of the position and the variance value of the speed being obtained by the positioning computation.

3. The construction machine according to claim 1, wherein

the computing device (33, 40) further determines, based on a sensing result of the second sensor (26, 27, 28), whether or not the work device (1) is positioned in a specific region, the specific region being a region in which the work device (1) degrades reception of the positioning signals on the antenna (31, 32), and
the first smoothing processing of the computing device (33, 40) is to correct, when it is determined that the work device (1) is positioned in the specific region, the variance value of the position of the machine body (2, 3) obtained by the positioning computation such that the variance value of the position becomes larger than in a case where the work device (1) is not positioned in the specific region, and then to perform smoothing processing with a strength corresponding to the magnitude of the corrected variance value.

4. The construction machine according to claim 3, wherein

the computing device (33, 40) further makes a motion determination that is to determine whether or not the machine body (2, 3) is in motion based on a sensing result of the first sensor (25),
the first smoothing processing of the computing device (33, 40) is to
perform smoothing processing with a strength corresponding to the magnitude of the variance value of the position of the machine body (2, 3) obtained by the positioning computation, without correcting the variance value of the position of the machine body (2, 3) obtained by the positioning computation, when it is determined that the work device (1) is positioned in the specific region and it is determined that the machine body (2, 3) is in motion, and
correct, when it is determined that the work device (1) is positioned in the specific region and it is determined that the machine body (2, 3) is motionless, the variance value of the position of the machine body (2, 3) obtained by the positioning computation such that the variance value of the position becomes larger than in the case where the work device (1) is not positioned in the specific region, and then perform smoothing processing with a strength corresponding to the magnitude of the corrected variance value.

5. The construction machine according to claim 1, wherein

the computing device (33, 40) further
makes a motion determination that is to determine whether or not the machine body (2, 3) is in motion based on a sensing result of the first sensor (25), and
performs second smoothing processing that is to further smooth the first smoothing processing,
the posture information of the computing device (33, 40) is computed on a basis of a result of the second smoothing processing, the information sensed by the first sensor (25), and the information sensed by the second sensor (26, 27, 28), and
strength of smoothing of the second smoothing processing is set to be stronger in a case where it is determined in the motion determination that the machine body (2, 3) is motionless than in a case where it is determined in the motion determination that the machine body (2, 3) is in motion.

6. The construction machine according to claim 5, further comprising:

an operation device (18a, 18b) for operating the machine body (2, 3); and
a third sensor that senses operation of the operation device (18a, 18b), wherein
the motion determination of the computing device (33, 40) is to determine that the machine body (2, 3) is in motion when the first sensor (25) senses motion of the machine body (2, 3) or when the third sensor senses operation of the operation device (18a, 18b).

7. The construction machine according to claim 1, wherein

the first smoothing processing of the computing device (33, 40) uses a statistical filter that performs smoothing processing including statistical processing, and
the variance value as a result of the positioning computation is used as an input value of the statistical filter.

**Patentansprüche**

1. Baumaschine mit:

einem Maschinenkörper (2, 3);
einer Arbeitsvorrichtung (1), die an dem Maschinenkörper (2, 3) in einer anhebbaren und absenkbaren Weise angebracht ist;
einer Antenne (31, 32), die an dem Maschinenkörper (2, 3) angebracht ist und Positionierungssignale von einer Vielzahl von Satelliten empfängt;
einem ersten Sensor (25), der Informationen über eine Stellung und Bewegung des Maschinenkörpers (2, 3) erfasst;
einem zweiten Sensor (26, 27, 28), der Informationen über eine Stellung der Arbeitsvorrichtung (1) erfasst; und
einer Berechnungsvorrichtung (33, 40), die Stellungsinformationen berechnet, die die Stellungen des Maschinenkörpers (2, 3) und der Arbeitsvorrichtung (1) angeben, wobei
die Berechnungsvorrichtung (33, 40) konfiguriert ist,
eine Positionierungsberechnung durchzuführen, die eine Position des Maschinenkörpers (2, 3) und einen Varianzwert der Position des Maschinenkörpers (2, 3) auf einer Basis der Positionierungssignale von der Vielzahl von Satelliten berechnen soll, wobei die Positionierungssignale durch die Antenne (31, 32) empfangen werden,
die Position des Maschinenkörpers (2, 3), die durch die Positionierungsberechnung erhalten wird, einer ersten Glättungsverarbeitung zu unterziehen, wobei die erste Glättungsverarbeitung einen Grad der Glättung erhöhen soll, wenn die Größe des Varianzwerts der Position des Maschinenkörpers (2, 3), der durch die Positionierungsberechnung erhalten wird, größer wird, und
die Stellungsinformationen auf der Basis eines Ergebnisses der ersten Glättungsverarbeitung, der Informationen, die durch den ersten Sensor (25) erfasst werden, und der Informationen, die durch den zweiten Sensor (26, 27, 28) erfasst werden, zu berechnen.

2. Baumaschine nach Anspruch 1, wobei

die Positionierungsberechnung der Berechnungsvorrichtung (33, 40) ferner eine Geschwindigkeit des Maschinenkörpers (2, 3) und einen Varianzwert der Geschwindigkeit des Maschinenkörpers (2, 3) auf einer Basis der Positionierungssignale von der Vielzahl von Satelliten berechnen soll, wobei die Positionierungssignale durch die Antenne (31, 32) empfangen werden, und
die erste Glättungsverarbeitung der Berechnungsvorrichtung (33, 40) die Position des Maschinenkörpers (2, 3) und die Geschwindigkeit des Maschinenkörpers (2, 3), die durch die Positionierungsberechnung erhalten werden, als Eingabeinformationen einzustellen und eine Glättungsverarbeitung mit einer Stärke der Glättung durchzuführen, die gemäß der Größe des Varianzwerts der Position des Maschinenkörpers (2, 3) und der Größe des Varianzwerts der Geschwindigkeit des Maschinenkörpers (2, 3) geändert wird, wobei der Varianzwert der Position und der Varianzwert der Geschwindigkeit durch die Positionierungsberechnung erhalten werden.

3. Baumaschine nach Anspruch 1, wobei

die Berechnungsvorrichtung (33, 40) ferner auf der Basis eines Erfassungsergebnisses des zweiten Sensors (26, 27, 28) bestimmt, ob die Arbeitsvorrichtung (1) in einem spezifischen Bereich positioniert ist oder nicht, wobei der spezifische Bereich ein Bereich ist, in dem die Arbeitsvorrichtung (1) den Empfang der Positionierungssignale an der Antenne (31, 32) verschlechtert, und
die erste Glättungsverarbeitung der Berechnungsvorrichtung (33, 40), wenn bestimmt wird, dass die Arbeitsvorrichtung (1) in dem spezifischen Bereich positioniert ist, den Varianzwert der Position des Maschinenkörpers (2, 3), der durch die Positionierungsberechnung erhalten wird, korrigieren soll, so dass der Varianzwert der Position größer wird als in einem Fall, in dem die Arbeitsvorrichtung (1) nicht in dem spezifischen Bereich positioniert ist, und dann eine Glättungsverarbeitung mit einer Stärke durchführen soll, die der Größe des korrigierten Varianzwerts entspricht.

**4.** Baumaschine nach Anspruch 3, wobei

die Berechnungsvorrichtung (33, 40) ferner eine Bewegungsbestimmung durchführt, die auf der Basis eines Erfassungsergebnisses des ersten Sensors (25) bestimmen soll, ob der Maschinenkörper (2, 3) in Bewegung ist oder nicht,
die erste Glättungsverarbeitung der Berechnungsvorrichtung (33, 40)
eine Glättungsverarbeitung mit einer Stärke durchführen soll, die der Größe des Varianzwerts der Position des Maschinenkörpers (2, 3) entspricht, der durch die Positionierungsberechnung erhalten wird, ohne den Varianzwert der Position des Maschinenkörpers (2, 3) zu korrigieren, der durch die Positionierungsberechnung erhalten wird, wenn bestimmt wird, dass die Arbeitsvorrichtung (1) in dem spezifischen Bereich positioniert ist, und bestimmt wird, dass der Maschinenkörper (2, 3) in Bewegung ist, und
wenn bestimmt wird, dass die Arbeitsvorrichtung (1) in dem spezifischen Bereich positioniert ist, und bestimmt wird, dass der Maschinenkörper (2, 3) bewegungslos ist, den Varianzwert der Position des Maschinenkörpers (2, 3), der durch die Positionierungsberechnung erhalten wird, korrigieren soll, so dass der Varianzwert der Position größer wird als in dem Fall, in dem die Arbeitsvorrichtung (1) nicht in dem spezifischen Bereich positioniert ist, und dann eine Glättungsverarbeitung mit einer Stärke durchführen soll, die der Größe des korrigierten Varianzwerts entspricht.

**5.** Baumaschine nach Anspruch 1, wobei

die Berechnungsvorrichtung (33, 40) ferner
eine Bewegungsbestimmung durchführt, die auf der Basis eines Erfassungsergebnisses des ersten Sensors (25) bestimmen soll, ob der Maschinenkörper (2, 3) in Bewegung ist oder nicht, und
eine zweite Glättungsverarbeitung durchführt, die die erste Glättungsverarbeitung weiter glätten soll,
die Stellungsinformationen der Berechnungsvorrichtung (33, 40) auf der Basis eines Ergebnisses der zweiten Glättungsverarbeitung, der Informationen, die durch den ersten Sensor (25) erfasst werden, und der Informationen, die durch den zweiten Sensor (26, 27, 28) erfasst werden, berechnet werden, und
die Stärke der Glättung der zweiten Glättungsverarbeitung in einem Fall, in dem bei der Bewegungsbestimmung bestimmt wird, dass der Maschinenkörper (2, 3) bewegungslos ist, stärker eingestellt wird als in einem Fall, in dem bei der Bewegungsbestimmung bestimmt wird, dass der Maschinenkörper (2, 3) in Bewegung ist.

**6.** Baumaschine nach Anspruch 5, ferner mit:

einer Betätigungsvorrichtung (18a, 18b) zum Betätigen des Maschinenkörpers (2, 3); und
einem dritten Sensor, der eine Betätigung der Betätigungsvorrichtung (18a, 18b) erfasst, wobei
die Bewegungsbestimmung der Berechnungsvorrichtung (33, 40) bestimmen soll, dass der Maschinenkörper (2, 3) in Bewegung ist, wenn der erste Sensor (25) eine Bewegung des Maschinenkörpers (2, 3) erfasst oder wenn der dritte Sensor eine Betätigung der Betätigungsvorrichtung (18a, 18b) erfasst.

**7.** Baumaschine nach Anspruch 1, wobei

die erste Glättungsverarbeitung der Berechnungsvorrichtung (33, 40) einen statistischen Filter verwendet, der eine Glättungsverarbeitung einschließlich einer statistischen Verarbeitung durchführt, und
der Varianzwert als ein Ergebnis der Positionierungsberechnung als ein Eingabewert des statistischen Filters verwendet wird.

**Revendications**

**1.** Engin de chantier comprenant:

un corps d'engin (2, 3) ;
un dispositif de travail (1) fixé au corps d'engin (2, 3) de manière à pouvoir être levé et abaissé ;
une antenne (31, 32) qui est fixée au corps d'engin (2, 3), et qui reçoit des signaux de positionnement en provenance d'une pluralité de satellites ;

un premier capteur (25) qui détecte des informations sur une posture et un mouvement du corps d'engin (2, 3) ;

un second capteur (26, 27, 28) qui détecte des informations sur une posture du dispositif de travail (1) ; et

un dispositif de calcul (33, 40) qui calcule des informations de posture indiquant les postures du corps d'engin (2, 3) et du dispositif de travail (1), dans lequel

le dispositif de calcul (33, 40) est configuré pour

effectuer un calcul de positionnement qui consiste à calculer une position du corps d'engin (2, 3) et une valeur de variance de la position du corps d'engin (2, 3) sur la base des signaux de positionnement en provenance de la pluralité de satellites, les signaux de positionnement étant reçus par l'antenne (31, 32),

soumettre la position du corps d'engin (2, 3) obtenue par le calcul de positionnement à un premier traitement de lissage, le premier traitement de lissage consistant à augmenter un degré de lissage à mesure que l'amplitude de la valeur de variance de la position du corps d'engin (2, 3) obtenue par le calcul de positionnement augmente, et calculer les informations de posture sur la base d'un résultat du premier traitement de lissage, des informations détectées par le premier capteur (25), et des informations détectées par le second capteur (26, 27, 28).

2.  Engin de chantier selon la revendication 1, dans lequel

le calcul de positionnement du dispositif de calcul (33, 40) consiste en outre à calculer une vitesse du corps d'engin (2, 3) et une valeur de variance de la vitesse du corps d'engin (2, 3) sur la base des signaux de positionnement en provenance de la pluralité de satellites, les signaux de positionnement étant reçus par l'antenne (31, 32), et

le premier traitement de lissage du dispositif de calcul (33, 40) consiste à régler la position du corps d'engin (2, 3) et la vitesse du corps d'engin (2, 3) obtenues par le calcul de positionnement en tant qu'informations d'entrée, et à effectuer un traitement de lissage avec une force de lissage modifiée en fonction de l'amplitude de la valeur de variance de la position du corps d'engin (2, 3), et de l'amplitude de la valeur de variance de la vitesse du corps d'engin (2, 3), la valeur de variance de la position et la valeur de variance de la vitesse étant obtenues par le calcul de positionnement.

3.  Engin de chantier selon la revendication 1, dans lequel

le dispositif de calcul (33, 40) détermine en outre, sur la base d'un résultat de détection du second capteur (26, 27, 28), si le dispositif de travail (1) est positionné ou non dans une région spécifique, la région spécifique étant une région dans laquelle le dispositif de travail (1) dégrade la réception des signaux de positionnement sur l'antenne (31, 32), et

le premier traitement de lissage du dispositif de calcul (33, 40) consiste à corriger, lorsqu'il est déterminé que le dispositif de travail (1) est positionné dans la région spécifique, la valeur de variance de la position du corps d'engin (2, 3) obtenue par le calcul de positionnement de sorte que la valeur de variance de la position augmente par rapport à un cas où le dispositif de travail (1) n'est pas positionné dans la région spécifique, puis à effectuer un traitement de lissage avec une force correspondant à l'amplitude de la valeur de variance corrigée.

4.  Engin de chantier selon la revendication 3, dans lequel

le dispositif de calcul (33, 40) effectue en outre une détermination de mouvement qui consiste à déterminer si le corps d'engin (2, 3) est en mouvement ou non sur la base d'un résultat de détection du premier capteur (25),

le premier traitement de lissage du dispositif de calcul (33, 40) consiste à effectuer un traitement de lissage avec une force correspondant à l'amplitude de la valeur de variance de la position du corps d'engin (2, 3) obtenue par le calcul de positionnement, sans corriger la valeur de variance de la position du corps d'engin (2, 3) obtenue par le calcul de positionnement, lorsqu'il est déterminé que le dispositif de travail (1) est positionné dans la région spécifique et qu'il est déterminé que le corps d'engin (2, 3) est en mouvement, et

corriger, lorsqu'il est déterminé que le dispositif de travail (1) est positionné dans la région spécifique et qu'il est déterminé que le corps d'engin (2, 3) est immobile, la valeur de variance de la position du corps d'engin (2, 3) obtenue par le calcul de positionnement de sorte que la valeur de variance de la position augmente par rapport au cas où le dispositif de travail (1) n'est pas positionné dans la région spécifique, puis effectuer un traitement de lissage avec une force correspondant à l'amplitude de la valeur de variance corrigée.

5.  Engin de chantier selon la revendication 1, dans lequel

le dispositif de calcul (33, 40) effectue en outre

une détermination de mouvement qui consiste à déterminer si le corps d'engin (2, 3) est en mouvement ou non sur la base d'un résultat de détection du premier capteur (25), et

effectue un second traitement de lissage qui consiste à lisser davantage le premier traitement de lissage, les informations de posture du dispositif de calcul (33, 40) sont calculées sur la base d'un résultat du second traitement de lissage, des informations détectées par le premier capteur (25), et des informations détectées par le second capteur (26, 27, 28), et

une force de lissage du second traitement de lissage est réglée pour être plus forte dans un cas où il est déterminé dans la détermination de mouvement que le corps d'engin (2, 3) est immobile que dans un cas où il est déterminé dans la détermination de mouvement que le corps d'engin (2, 3) est en mouvement.

6. Engin de chantier selon la revendication 5, comprenant en outre:

un dispositif d'actionnement (18a, 18b) pour actionner le corps d'engin (2, 3); et
un troisième capteur qui détecte un actionnement du dispositif d'actionnement (18a, 18b), dans lequel
la détermination de mouvement du dispositif de calcul (33, 40) consiste à déterminer que le corps d'engin (2, 3) est en mouvement lorsque le premier capteur (25) détecte un mouvement du corps d'engin (2, 3) ou lorsque le troisième capteur détecte un actionnement du dispositif d'actionnement (18a, 18b).

7. Engin de chantier selon la revendication 1, dans lequel

le premier traitement de lissage du dispositif de calcul (33, 40) utilise un filtre statistique qui effectue un traitement de lissage incluant un traitement statistique, et
la valeur de variance en tant que résultat du calcul de positionnement est utilisée en tant que valeur d'entrée du filtre statistique.

# FIG. 1

# FIG. 2

HYDRAULIC SYSTEM CONTROL SECTION

MONITOR DISPLAY CONTROL SECTION

POSITIONING COMPUTING SECTION

CONSTRUCTION TARGET SURFACE COMPUTING SECTION

STORAGE DEVICE

PROCESSOR

CONTROLLER

CONSTRUCTION INFORMATION

# FIG. 3

SATELLITE
CELESTIAL DIAGRAM
SATELLITE
GNSS ANTENNA
1

# FIG. 4

SATELLITE
Z
CELESTIAL DIAGRAM
SATELLITE
GNSS ANTENNA
1

# FIG. 5

Y
(ERROR ELLIPSE)
Bd
A (TRUE POSITION)
Cd(ERROR ELLIPSE)
Bv
(AVERAGE VALUE)
Cv(AVERAGE VALUE)
X

# FIG. 6

EP 4 166 725 B1

# FIG. 7

30(33)

65

652

**POSITIONING SYSTEM (GNSS RECEIVER)**

p → **TIME CONSTANT CHANGING LPF** → pc1 →

66

**SECOND SMOOTHING PROCESSING SECTION**

651

TIME CONSTANT

VARIANCE

Rp →

FIRST SMOOTHING PROCESSING SECTION

# FIG. 8

61

66

65

661

663

**FIRST SMOOTHING PROCESSING SECTION** → pc1 → **FIRST STRENGTH SMOOTHING COMPUTING SECTION** →

**SELECTING SECTION** → pc2 →

62

**THREE-DIMENSIONAL POSTURE COMPUTING SECTION**

662

**SECOND STRENGTH SMOOTHING COMPUTING SECTION** →

64

**MOTION DETERMINING SECTION** →

SECOND SMOOTHING PROCESSING SECTION

POSITION CORRECTION COMPUTING SECTION

# FIG. 9

# FIG. 10

START

↓

CAPTURE COMPUTATION RESULTS FROM POSITIONING SYSTEM, AND
CAPTURE VARIOUS KINDS OF SENSING RESULTS FROM RESPECTIVE IMUs                    S10

↓

SUBJECT COMPUTATION RESULT OF POSITIONING SYSTEM
TO FIRST SMOOTHING PROCESSING                    S20

↓

MACHINE BODY IS IN MOTION ?    S30    NO

YES ↓                                    ↓

SUBJECT PROCESSING RESULT OF
FIRST SMOOTHING PROCESSING
TO PROCESSING OF RELATIVELY WEAK SMOOTHING    S40

SUBJECT PROCESSING RESULT OF
FIRST SMOOTHING PROCESSING
TO PROCESSING OF RELATIVELY STRONG SMOOTHING    S50

↓

COMPUTE POSTURE INFORMATION OF HYDRAULIC EXCAVATOR
BY USING POSITION RESULTING FROM SMOOTHING PROCESSING (CORRECTED POSITION)    S60

↓

RETURN

# FIG. 11

SATELLITE

SATELLITE REGION IN WHICH
SIGNALS ARE INTERRUPTED

TIME t1          TIME t2          TIME t3          TIME t4          TIME ···

FRONT DEVICE     FRONT DEVICE     FRONT DEVICE     FRONT DEVICE     FRONT DEVICE
LOWERING         RAISING          LOWERING         LOWERING         LOWERING
                                                                    CONTINUED

GNSS ANTENNA

1

·ONLY WORK OF FRONT WORK DEVICE 1 ACCORDING TO OPERATOR'S OPERATION IS PERFORMED,
 AND THERE IS NO MOTION OF MACHINE BODY SUCH AS TRAVELLING, SWINGING, OR LIKE

·DISPLACEMENT OF MACHINE BODY WITHOUT OPERATOR'S OPERATION SUCH AS SLIPPING OF
 MACHINE BODY IS ABSENT

# FIG. 12

COMPUTATION RESULT (OUTPUT) OF POSITIONING SYSTEM

VARIANCE { ← POSITIONING VALUE

COORDINATE

A2

A1

t1  t2  t3  t4  t5  t6  t7  t8  t9  t10   TIME

# FIG. 13

RESULT OF SMOOTHING PROCESSING ACCORDING TO COMPARATIVE EXAMPLE

- ○ POSITIONING RESULT OF POSITIONING SYSTEM (POSITION BEFORE PROCESSING)
- ━●━ RESULT OF SMOOTHING PROCESSING

IT IS DIFFICULT TO CORRECT DEVIATION OF POSITIONING RESULT TO ORIGINAL POSITION WHEN PERFORMING PROCESSING OF RELATIVELY WEAK SMOOTHING

NULLIFY DEVIATION OF POSITIONING RESULT BY PROCESSING OF STRONG SMOOTHING

# FIG. 14

PROCESSING RESULT OF FIRST SMOOTHING PROCESSING SECTION

- ○ POSITIONING RESULT OF POSITIONING SYSTEM (POSITION BEFORE PROCESSING)
- ━●━ RESULT OF SMOOTHING PROCESSING

VARIANCE OF POSITIONING COMPUTATION IS LARGE, AND THEREFORE RELIABILITY OF POSITIONING RESULT (OBSERVATION VALUE) IS LOW

POSITIONING RESULT (PRESENT OBSERVATION VALUE) OF LOW RELIABILITY IS NOT REFLECTED, BUT PREVIOUS PROCESSING RESULT (POSITION) IS REFLECTED (POSITION IS NOT CHANGED)

# FIG. 15

SATELLITE

TIME t1        TIME t2        TIME t3        TIME t10

...

TIME t2~t10
(BROKEN LINE)

GNSS ANTENNA        TIME t1
(SOLID LINE)        1

• THERE IS NO DEGRADATION IN SATELLITE POSITIONING ENVIRONMENT
  DUE TO MOTION OF FRONT WORK DEVICE 1

• DISPLACEMENT OF MACHINE BODY DUE TO SLIPPING OF MACHINE BODY
  WITHOUT OPERATOR'S OPERATION OCCURS

# FIG. 16

COMPUTATION RESULT (OUTPUT) OF POSITIONING SYSTEM

VARIANCE ⎰        POSITIONING
         ⎱        VALUE

COORDINATE

A2

A1

t1   t2   t3   t4   t5   t6   t7   t8   t9   t10

TIME

# FIG. 17

RESULT OF SMOOTHING PROCESSING ACCORDING TO COMPARATIVE EXAMPLE

○    POSITIONING RESULT OF POSITIONING SYSTEM
(POSITION BEFORE PROCESSING)

━━ RESULT OF SMOOTHING PROCESSING

COORDINATE

A2

A1

PROCESSING OF STRONG SMOOTHING DOES NOT READILY REFLECT
CHANGE IN POSITIONING RESULT, AND RESULTS IN LACK OF
CHANGE IN POSITION AS PROCESSING RESULT

t1   t2   t3   t4   t5   t6   t7   t8   t9   t10

TIME

# FIG. 18

PROCESSING RESULT OF FIRST SMOOTHING PROCESSING SECTION

VARIANCE OF POSITIONING COMPUTATION IS SMALL, AND THEREFORE
RELIABILITY OF POSITIONING RESULT (OBSERVATION VALUE) IS HIGH

○    POSITIONING RESULT OF POSITIONING SYSTEM
(POSITION BEFORE PROCESSING)

━━ RESULT OF SMOOTHING PROCESSING

COORDINATE

A2

A1

POSITIONING RESULT (PRESENT OBSERVATION VALUE) OF HIGH RELIABILITY
IS REFLECTED IN POSITION AS PROCESSING RESULT

t1   t2   t3   t4   t5   t6   t7   t8   t9   t10

TIME

# FIG. 19

### COMPUTATION RESULT (OUTPUT) OF POSITIONING SYSTEM

COORDINATE

VARIANCE ⟵ POSITIONING VALUE

A2

A1

t1 t2 t3 t4 t5 t6 t7 t8 t9 t10

TIME

# FIG. 20

### RESULT OF SMOOTHING PROCESSING ACCORDING TO COMPARATIVE EXAMPLE

○ POSITIONING RESULT OF POSITIONING SYSTEM
— RESULT OF SMOOTHING PROCESSING

COORDINATE

A2

A1

AFFECTED BY POSITIONING RESULTS AT TIMES t5 TO t6, IT IS DIFFICULT TO FOLLOW SUBSEQUENT POSITIONING RESULTS

t1 t2 t3 t4 t5 t6 t7 t8 t9 t10

TIME

# FIG. 21

### PROCESSING RESULT OF FIRST SMOOTHING PROCESSING SECTION

POSITIONING RESULT OF LOW RELIABILITY IS NOT REFLECTED, BUT PREVIOUS PROCESSING RESULT (POSITION) IS REFLECTED

COORDINATE

○ POSITIONING RESULT OF POSITIONING SYSTEM
— RESULT OF SMOOTHING PROCESSING

A2

A1

VARIANCE OF POSITIONING COMPUTATION AT TIMES t5 TO t6 IS LARGE, AND THEREFORE RELIABILITY OF POSITIONING RESULT (OBSERVATION VALUE) IS LOW

t1 t2 t3 t4 t5 t6 t7 t8 t9 t10

TIME

# FIG. 22

EP 4 166 725 B1

# FIG. 23

EP 4 166 725 B1

# FIG. 24

30(33)

p
v

POSITIONING
SYSTEM

Σp,Σv

26

BOOM
IMU

1

654

$K_{UP}$

655

×

656

KALMAN
FILTER

65B

66

SECOND
SMOOTHING
PROCESSING
SECTION

FIRST SMOOTHING PROCESSING SECTION

# FIG. 25

30(33)

p
v

POSITIONING
SYSTEM

Σp,Σv

26

BOOM
IMU

64

MOTION
DETERMINING
SECTION

657

GAIN
TABLE

655

×

656

KALMAN
FILTER

65B

66

SECOND
SMOOTHING
PROCESSING
SECTION

FIRST SMOOTHING PROCESSING SECTION

## FIG. 26

EP 4 166 725 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015186845 A